# EUROPEAN PATENT APPLICATION

(11) **EP 4 811 703 A1**
(43) Date of publication of application: **23.09.2026**
(21) Application number: 24892830.1
(22) Date of filing: 15.07.2024
(51) Int. Cl.: H04L 5/00, H04L 25/02

(54) **REFERENCE SIGNAL CONFIGURATION INFORMATION SENDING AND RECEIVING METHOD AND APPARATUS, AND STORAGE MEDIUM**

(30) Priority: 22.11.2023 CN 202311575071
(71) Applicant: ZTE CORPORATION, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); LIU, Wenfeng, Shenzhen, Guangdong 518057 (CN); LI, Lun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/105400
(87) International publication number: WO 2025/107666

(57) **Abstract**

Embodiments of the present disclosure relate to the technical field of communications, and provide a reference signal configuration information sending and receiving method and apparatus, and a storage medium. The sending method comprises: generating reference signal configuration information, the reference signal configuration information comprising N reference signal patterns, the N reference signal patterns corresponding to M resource units, and N and M being integers greater than 1; and sending the reference signal configuration information.

## Description

### CROSS-REFERENCE TO RELATED APPLICATION(S)

The present disclosure claims a priority to Chinese Patent Application with the application No. 202311575071.X, filed with China National Intellectual Property Administration on November 22, 2023, and titled "Reference signal configuration information sending and receiving method and apparatus, and storage medium", the entire content of which is incorporated into herein by reference.

### TECHNICAL FIELD

The present disclosure relates to the field of communication technologies, and in particular, to a reference signal configuration information sending method and receiving method and apparatus, and a storage medium.

### BACKGROUND

Multiple-antenna technologies have been widely used in various wireless communication technologies. The multiple-antenna technologies include multiple-input multiple-output (multiple-input-multiple-output, MIMO), joint transmission (JT) for a plurality of transmission nodes, high-frequency beamforming, etc. Herein, in order to implement the performance of multiple antennas, it is crucial for communication nodes to obtain accurate channel information.

Generally, channel may be acquired through reference signals, including but not limited to demodulation reference signals (DMRSs). A receiving end acquires channel information by receiving reference signals, and acquires channel state information or demodulates data, etc., according to the acquired channel information. Herein, the reference signals have a plurality of types of different patterns, which are generally pre-configured by a base station. A terminal receives the reference signals according to the configured patterns. However, currently, configurations of reference signal patterns are relatively simple, for example, a same reference signal pattern may be configured for different resource units, and flexibility of reference signal pattern configuration is relatively lower.

### SUMMARY

The present disclosure provides a reference signal configuration information sending method and receiving method and apparatus, and a storage medium.

In a first aspect, the present disclosure provides a reference signal configuration information sending method and the method includes: generating reference signal configuration information, where the reference signal configuration information includes N reference signal patterns, the N reference signal patterns correspond to M resource units, and N and M are integers greater than 1; and sending the reference signal configuration information.

In a second aspect, the present disclosure provides a reference signal configuration information receiving method and the method includes: receiving reference signal configuration information, where the reference signal configuration information includes N reference signal patterns, the N reference signal patterns correspond to M resource units, and N and M are integers greater than 1; and determining reference signal patterns of the M resource units; and receiving reference signals corresponding to the resource units according to the reference signal patterns of the M resource units.

In a third aspect, the present disclosure provides a communication apparatus and the communication apparatus includes: a generating module, configured to generate reference signal configuration information, where the reference signal configuration information includes N reference signal patterns, the N reference signal patterns correspond to M resource units, and N and M are integers greater than 1; and a sending module, configured to send the reference signal configuration information.

In a fourth aspect, the present disclosure provides another communication apparatus and the communication apparatus includes: a first receiving module, configured to receive reference signal configuration information, where the reference signal configuration information includes N reference signal patterns, the N reference signal patterns correspond to M resource units, and N and M are integers greater than 1; a determining module, configured to determine reference signal patterns of the M resource units; and a second receiving module, configured to receive reference signals corresponding to the resource units according to the reference signal patterns of the M resource units.

In a fifth aspect, a communication apparatus is provided, and includes: a processor and a memory; the memory has stored instructions executable by the processor; the processor is configured to execute the instructions, so that the communication apparatus implements any one of the methods provided in the first aspect or the second aspect above.

In a sixth aspect, a computer readable storage medium is provided and the computer readable storage medium stores computer instructions, and the computer instructions, upon being executed on a computer, enable the computer to perform any one of the methods provided in the first aspect or the second aspect above.

In a seventh aspect, a computer program product containing computer instructions, and the computer instructions, upon being executed on a computer, enable the computer to perform any one of the methods provided in the first aspect or the second aspect above.

### BRIEF DESCRIPTION OF THE DRAWINGS

The drawings are used to provide a further understanding of the technical solutions of the present disclosure, constitute a part of the specification, are used to explain the technical solutions of the present disclosure together with the embodiments of the present disclosure, and do not limit the technical solutions of the present disclosure.
FIG. 1 is a schematic diagram of an architecture of a communication system, provided by the embodiments of the present disclosure;
FIG. 2 is a flow chart of a reference signal configuration information sending method, provided by the embodiments of the present disclosure;
FIG. 3 is a schematic diagram of a reference signal pattern, provided by the embodiments of the present disclosure;
FIG. 4 is a schematic diagram of another reference signal pattern, provided by the embodiments of the present disclosure;
FIG. 5 is a schematic diagram of another reference signal pattern, provided by the embodiments of the present disclosure;
FIG. 6 is a schematic diagram of another reference signal pattern, provided by the embodiments of the present disclosure;
FIG. 7 is a schematic diagram of another reference signal pattern, provided by the embodiments of the present disclosure;
FIG. 8 is a schematic diagram of another reference signal pattern, provided by the embodiments of the present disclosure;
FIG. 9 is a schematic diagram of another reference signal pattern, provided by the embodiments of the present disclosure;
FIG. 10 is a flow chart of another reference signal configuration information receiving method, provided by the embodiments of the present disclosure;
FIG. 11 is a schematic diagram of components of a communication apparatus, provided by the embodiments of the present disclosure;
FIG. 12 is a schematic diagram of components of another communication apparatus, provided by the embodiments of the present disclosure; and
FIG. 13 is a structural schematic diagram of a communication apparatus, provided by the embodiments of the present disclosure.

### DETAILED DESCRIPTION

The technical solutions in the embodiments of the present disclosure will be described clearly and completely below in conjunction with the drawings in the embodiments of the present disclosure, and obviously, the described embodiments are only a part of the embodiments of the present disclosure, but not all of the embodiments. Based on the embodiments in the present disclosure, all other embodiments obtained by those ordinary skilled without creative efforts shall fall within the protection scope of the present disclosure.

In the description of the present disclosure, unless otherwise stated, the character "/" means "or", and for example, "A/B" may mean A or B. Herein, "and/or" is merely an association relationship for describing associated objects, which represents that there may be three kinds of relationships, for example, 'A and/or B' may represent: A exists alone, both A and B exist, or B exists alone. In addition, "at least one" means one or more, and "a/the plurality of/multiple" means two or more. Words, such as "first" and "second", etc., do not limit the quantity and execution order, and the words, such as "first" and "second", etc., also do not necessarily limit different items.

It should be noted that in the present disclosure, the words such as "exemplary/exemplarily" or "for example", etc., are used to present an example, illustration, or explanation. Any embodiment or design scheme described with "exemplary/exemplarily" or "for example" in the present disclosure should not be construed as preferred or advantageous over other embodiments or design schemes. Specifically, the use of the terms such as "exemplary/exemplarily" or "for example", etc., is intended to present related concepts in a specific manner.

To demodulate received data or signaling, a demodulation reference signal (DMRS) is needed. DMRS may be used to demodulate uplink data or downlink data. At least two types of DMRS are included, including a DMRS type 1 pattern based on interleaved frequency domain multiplexing (IFDM), and a DMRS type 2 based on a frequency domain orthogonal covering code (Frequency domain orthogonal covering code, FD-OCC). Each type may further include different numbers of additional symbols to adapt to different mobility speeds. For example, in a receiver based on advanced channel estimation such as artificial intelligence (AI), etc., a sparser pattern than that in NR may be used, where in the DMRS type 1, a code division multiplexing (CDM) group includes 6*S resource elements (REs), while an AI-based receiver may use 1*S REs or 2*S REs to form a CDM group. Alternatively, in a CDM group of DMRS type 2, the CDM group includes at least 4*S REs, while an AI-based receiver may enable a CDM group to include 2*S REs. S is a number of symbols in a CDM group, and may be 1 or 2.

That is, DMRS may have many types of patterns, and different patterns are applicable to different channel features or resource units. For example, some subbands have large frequency selective fading, some subbands have small frequency selective fading, some slot channels correspond to fast fading, and some slots correspond to slow fading. In existing technologies, the configuration of DMRS patterns is relatively simple. For resources allocated to a same terminal, different layers, different slots, and different physical resource blocks (Physical Resource blocks, PRBs), a same pattern is currently used. However, in practice, different slots, different PRBs, and different layers may correspond to different base stations or terminals, which can result in different channel features. This configuration manner is relatively simple, but has poor generality and cannot adapt to the channel features of different layers and different PRBs. It should be noted that, for other reference signals other than DMRS, there may also be a plurality of types of patterns, and different reference signal patterns may be used for different resource units. In the embodiments of the present disclosure, taking an example of the DMRS, but the used methods and apparatuses may be extended to different types of reference signals, such as a channel state information reference signal (channel-state information reference signal, CSI-RS), a sounding reference signal (SRS), a synchronization signal block (synchronization signals block, SSB), a physical broadcast channel (PBCH), a synchronization signal block/physical broadcast channel (SSB/PBCH), etc.

In view of this, the embodiments of the present disclosure provide a reference signal configuration information sending method, and the method includes: generating reference signal configuration information; sending the reference signal configuration information, where the reference signal configuration information includes N reference signal patterns, the N reference signal patterns correspond to M resource units, and N and M are integers greater than 1. In this way, reference signal patterns may be configured more flexibly, improving the flexibility of configuration of the reference signal pattern.

The technical solutions provided in the embodiments of the present disclosure may be applied to various mobile communication networks, for example, new radio (New Radio, NR) mobile communication networks using the fifth generation mobile communication technology (5th generation mobile networks, 5G), future mobile communication networks (including but not limited to various sixth generation mobile communication technologies, 6G), or multiple communication fusion systems, etc., which are not limited to the embodiments of the present disclosure.

A network architecture of a mobile communication network (including but not limited to 3G, 4G, 5G and future mobile communication networks) in the embodiments of the present disclosure may include network side devices (for example, including but not limited to a base station) and receiving side devices (for example, including but not limited to a terminal). Also, it should be understood that, in the example, in a downlink, a first communication node (also referred to as a first communication node device) may be a base station side device, and a second communication node (also referred to as a second communication node device) may be a terminal side device. Of course, in an uplink, the first communication node may also be a terminal side device, and the second communication node may also be a base station side device. In a case where two communication nodes are in device-to-device communication, both the first communication node and the second communication node may be base stations or terminals. The first communication node and the second communication node may be referred to as a first node and a second node for short, respectively.

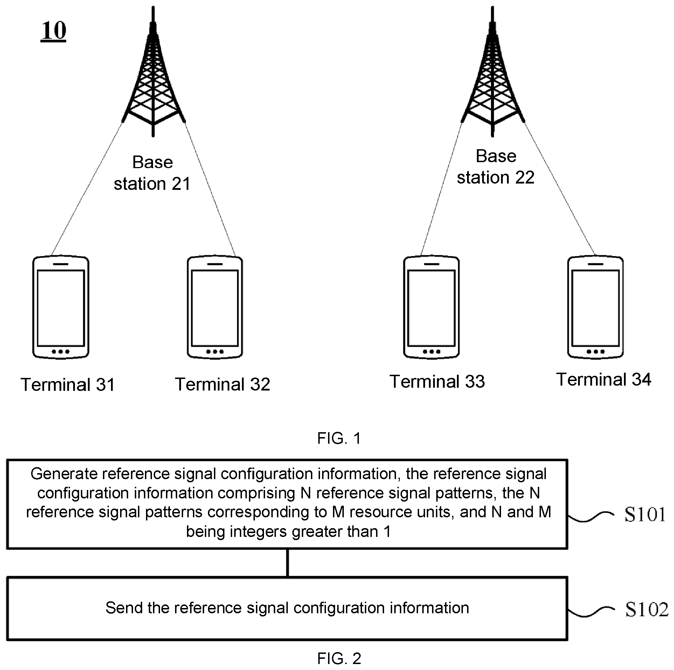

Exemplarily, taking an example in which the network side device is a base station and the receiving side device is a terminal, FIG. 1 shows a schematic diagram of an architecture of a communication system provided by the embodiments of the present disclosure. As shown in FIG. 1, a communication system 10 includes a plurality of base stations (e.g., base station 21 and base station 22) and a plurality of terminals (e.g., terminal 31, terminal 32, terminal 33, and terminal 34). Herein, the plurality of base stations and the plurality of terminals may be communicatively connected. Herein, a base station may provide network services to terminals in a cell, and may also provide network services to terminals in a plurality of cells at the same time.

In some embodiments, a base station may be a base station or an evolutional base station (evolutional node B, eNB or eNodeB) in long term evolution (LTE), long term evolution advanced (LTEA), a base station device in a 5G network, or a base station in a future communication system, etc., the base station may include various macro base stations, micro base stations, home base stations, wireless remote, reconfigurable intelligent surfaces (RISs), routers, wireless fidelity (WIFI) devices, or various network side devices in a primary cell and a secondary cell, etc.

In some embodiments, the terminal may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (User Equipment, UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

In some embodiments, the higher layer signaling includes but is not limited to radio resource control (Radio Resource Control, RRC), media access control control element (MAC CE), and other signalings other than the physical layer signaling, such as a LTE positioning protocol (LTE Positioning Protocol, LPP) higher layer signaling, an NR positioning protocol A (NR Positioning Protocol A, NRPPa) higher layer signaling, a LTE positioning protocol A (LTE Positioning Protocol A, LPPa) higher layer signaling, and LPP is also applied to an NR positioning protocol. The physical layer signaling may also be transmitted between the base station and the terminal, for example, a downlink physical layer signaling may be transmitted on a physical downlink control channel (PDCCH) between the base station and the terminal, and an uplink physical layer signaling may be transmitted on a physical uplink control channel (PUCCH) between the base station and the terminal.

In some embodiments, an indicator of a parameter may also be referred to as an index or an identifier (ID), and concepts of indicator, identifier and index are equivalent. For example, a resource identifier of a wireless system may also be referred to as a resource indication or a resource index. Herein, a resource index of the wireless system includes but is not limited to one of: an index corresponding to a reference signal resource, a group of reference signal resources, a reference signal resource configuration, a channel state information (Channel State Information, CSI) report, a CSI report set, a terminal, a base station, a panel, a neural network, a sub-neural network, a neural network layer, a precoding matrix, a beam, a transmission mode, a sending mode, a receiving mode, a module, a model, a functional module, a function, etc. The base station may indicate an identifier of a resource or a group of resources to the terminal by various higher layer signalings or physical layer signalings. The terminal may also feedback an identifier of a resource or a group of resources to a base station via a higher layer signaling and/or a physical layer signaling.

In some embodiments, transmission includes sending or receiving. For example, send data or a signal, or receive data or a signal.

In some embodiments, in order to calculate channel state information or perform channel estimation, mobility management, positioning, etc., a base station or a terminal needs to send a reference signal (RS). Herein, the reference signal includes, but is not limited to, a channel state information-reference signal (channel-state information reference signal, CSI-RS), where the channel state information-reference signal includes a zero power CSI-RS (zero power CSI-RS, ZP CSI-RS) and a non-zero power CSI-RS (non-zero power CSI-RS, NZP CSI-RS), a channel state information-interference measurement (channel-state information-interference measurement, CSI-IM), a sounding reference signal (SRS), a synchronization signal block (SSB), a physical broadcast channel (PBCH), and a synchronization signal block/physical broadcast channel (SSB/PBCH). Herein, the NZP CSI-RS may be used to measure a channel or measure interference, the CSI-RS may be used for tracking and may be referred to as a tracking reference signal (CSI-RS for Tracking, TRS), while the CSI-IM is generally used to measure interference, and the SRS is used to measure an uplink channel. In addition, a set of resource elements (REs) included in a time-frequency resource used for transmitting a reference signal is referred to as a reference signal resource, for example, CSI-RS resource, SRS resource, CSI-IM resource, and SSB resource. Herein, the SSB includes a synchronization signal block and/or a physical broadcast channel.

In order to save signaling overhead, etc., a plurality of reference signal resources may be divided into a plurality of sets (for example, CSI-RS resource set, CSI-IM resource set, SRS resource set). The reference signal resource set includes at least one reference signal resource, and a plurality of reference signal resource sets may all come from a same reference signal resource setting (for example, a CSI-RS resource setting, an SRS resource setting, where the CSI-RS resource setting may be merged with the CSI-IM resource setting, all referred to as a CSI-RS resource setting), to configure parameter information.

In some embodiments, a time instance represents a time period, for example, it may be a slot, e.g., a slot, a mini slot, or a group of symbols. A slot or a mini slot may include at least one symbol. Herein, a symbol refers to a time unit in a subframe, a frame, or a slot, and the unit may be millisecond, microsecond, nanosecond, second, etc. For example, the symbol may be an orthogonal frequency division multiplexing (OFDM) symbol, a single-carrier frequency division multiplexing access (single-carrier frequency division multiple access, SC-FDMA) symbol, or an orthogonal frequency division multiplexing access (orthogonal frequency division multiple access, OFDMA) symbol, or symbols corresponding to new various waveforms in future communication systems, etc.

In some embodiments, a minimum transmission unit carrying a modulation symbol is a resource element (RE), where the RE is a minimum time-frequency resource (including a frequency domain subcarrier and a radio resource on a symbol) used to transmit a modulation symbol. A radio resource composed of a plurality of symbols and a plurality of subcarriers constitutes a physical resource block, for example, symbols with consecutive indices from 1 to 14 and 12 subcarriers with consecutive indices constitute a physical resource block (PRB). Herein, a reference signal pattern includes at least one RE, and a reference signal is transmitted only on REs pre-configured by the base station, which is referred to as a reference signal pattern, for example, a DMRS pattern, a CSI-RS pattern, or an SRS pattern.

In some embodiments, a beam includes a transmitting beam, a receiving beam, a pair of receiving beam and transmitting beam, a pair of transmitting beam and receiving beam. In some embodiments, the beam may be understood as a resource, such as a reference signal resource, a transmitting end spatial filter, a receiving end spatial filter, a spatial filter, a spatial receiving parameter, transmitting end precoding, receiving end precoding, an antenna port, an antenna weight vector, an antenna weight matrix, etc. A beam index may be replaced by a resource index (for example, a reference signal resource index), because the beam may be bound with resources on at least one of time domain, frequency domain, or code domain for transmissions. The beam may also be a transmission (sending/receiving) mode; the transmission mode herein may include spatial division multiplexing, frequency domain/time domain diversity, beamforming, etc. In addition, the base station may perform a quasi co-location (QCL) configuration for two reference signals and inform a user end to describe a channel characteristic hypothesis. Herein, parameters involved in the quasi co-location include at least: Doppler spread, Doppler shift, delay spread, average delay, average gain and spatial parameter (Spatial Rx parameter, or Spatial parameter). Herein, the spatial parameter may include a spatial receiving parameter, angle information, a spatial correlation parameter of the receiving beam, average delay, and a correlation parameter of time-frequency channel response (including phase information). The angle information may include at least one of: an angle of arrival (AOA) or an angle of departure (AOD). In a case where the angle information includes an azimuth angle and an elevation angle, the angle of arrival includes a zenith angle of arrival (ZOA) and an azimuth angle of arrival (AOD), and the angle of departure includes a zenith angle of departure (ZOD) and an azimuth angle of departure (AOA). The spatial domain filtering may be at least one of: a discrete Fourier transform (Discrete Fourier Transform, DFT) vector, a precoding vector, a DFT matrix, a precoding matrix, a vector constituted by a linear combination of a plurality of DFTs, or a vector constituted by a linear combination of a plurality of precoding vectors. In some embodiments, concepts of a vector and a vector quantity are interchangeable. In some embodiments, a beam pair includes a combination of a transmitting beam and a receiving beam.

In some embodiments, the beam direction or beam angle may correspondingly include at least one of: angle of arrival (Angle of Arrival, AOA), angle of departure (Angle of Departure, AOD), a vector or vector index constructed by at least one angle of AOA and AOD, a discrete Fourier transformation vector, a codeword in a codebook, a transmitting beam index, a receiving beam index, a transmitting beam group index, and a receiving beam group index. Herein, when the angle information includes an azimuth angle and an elevation angle, the angle of arrival includes a zenith angle of arrival and an azimuth angle of arrival, and the angle of departure includes a zenith angle of departure and an azimuth angle of departure.

In some embodiments, a communication node may select an information processing mode to process the obtained information (e.g., channel information, channel matrix information, time domain channel information, frequency domain channel information, angle information, position information), to obtain an information processing result (referred to as a processing result for short). The processing result includes the above one or more pieces of the channel state information, or one or more pieces of the beam parameter information, or angle information, position information (e.g., coordinates), and position parameter information. The position parameter information includes but is not limited to at least one of: reference signal time difference (RSTD), relative time of arrival (RTOA), angle of arrival (AOA), angle of departure (AOD), receiving-transmitting time difference (Rx-Tx time difference), transmitting-receiving time difference (Tx-Rx time difference), reference signal received power, and multi-path information, where the Rx-Tx time difference includes an Rx-Tx time difference at a base station side (gNB Rx-Tx time difference) and an Rx-Tx time difference at a terminal side (UE Rx-Tx time difference). When the angle information includes an azimuth angle and a pitch angle, the angle of arrival includes a zenith angle of arrival (ZOA) and an azimuth angle of arrival (azimuth angle of departure, AOD), the angle of departure includes a zenith angle of departure (ZOD) and an azimuth angle of departure (Azimuth angle of Departure, AOA), and a number of paths is added, the relative delay of the path is added, the power of the multi-path is added, the time domain response of the multi-path is added, and a real part and an imaginary part of the time domain response of the multi-path are added.

In some embodiments, a communication node may select an information processing mode to process the obtained information (e.g., channel information, channel matrix information, time domain channel information, frequency domain channel information, angle information, position information), to obtain an information processing result. The processing result includes one or more pieces of the channel state information, or one or more pieces of the beam parameter information.

In some embodiments, the information processing mode may be a traditional information processing mode or various advanced information processing modes. The advanced information processing modes include but are not limited to an information processing mode based on artificial intelligence (AI). AI may include the following types: machine learning (ML), deep learning, reinforcement learning, transfer learning, deep reinforcement learning, and meta learning, etc. In some examples, the information processing mode is implemented by an artificial intelligence network (also referred to as a neural network, or a neural network model, or a model).

In some embodiments, artificial intelligence includes devices, components, software, modules, models, functional modules, functional functions, etc., with self-learning capabilities, such as machine learning, deep learning, reinforcement learning, transfer learning, deep reinforcement learning, meta learning, etc. In some embodiments, artificial intelligence is implemented by an artificial intelligence network (or referred to as a neural network), where the neural network includes a plurality of layers, each layer includes at least one node, and in an example, the neural network includes an input layer, an output layer, and at least one hidden layer. Herein, each layer of the neural network includes but is not limited to using at least one of a fully connected layer, a dense layer, a convolutional layer, a transposed convolutional layer, a direct connection layer, an activation function, a normalization layer, a pooling layer, etc. In some examples, each layer of the neural network may include a sub-neural network, such as a residual block (Residual Network block, or Resnet block), a dense network (Densenet Block), a recurrent network (Recurrent Neural Network, RNN), etc. The artificial intelligence network may be implemented by a model, and the model may include but is not limited to a model implemented based on the neural network. The neural network model includes a neural network model structure and/or a neural network model parameter, where the neural network model structure may be referred to as a model structure for short, and the neural network model parameter may be referred to as a network parameter or a model parameter for short. Based on the model structure, a network architecture of the neural network may be determined, such as a number of layers, a size of each layer, an activation function, a connection situation, a size of a convolution kernel and a convolution step, a convolution type (e.g., 1D (dimension) convolution, 2D convolution, 3D convolution, hollow convolution, transposed convolution, separable convolution, group convolution, extended convolution, etc.), and the network parameter is a weight value and/or biases corresponding to each network layer in the neural network model and their values. In addition, a model structure may correspond to a plurality of different sets of values of neural network model parameters, to adapt to different scenarios. Subsequently, the neural network model parameter may be obtained through online training or offline training, for example, by inputting at least one sample, to train the neural network model, to obtain the neural network model parameter.

Exemplarily, a sample includes N features (Features) and M labels (Labels), where N is a positive integer, and M is an integer greater than or equal to 0. In addition, a plurality of samples may constitute a data set. In an example, a sample includes a feature and a label, for example, a sample in supervised learning. In another example, a sample has only one feature and no label, for example, a sample in unsupervised learning. In yet another example, a sample has a plurality of features and a label, for example, a sample in a supervised learning network model with a plurality of inputs and a single output. In yet another example, a sample includes a feature and a plurality of labels, for example, a sample in a supervised learning network model with a single input and a plurality of outputs. In some embodiments, the feature of a sample may be an array, and the label may also be an array. Herein, an array may be a vector or a matrix, or a tensor with a dimension greater than two. Each element in the array may be a discrete value or a real value, for example, a real value from 0 to 1, or a real value from -0.5 to 0.5.

In an example, normalization processing needs to be performed on elements in the array corresponding to the label or the feature, to facilitate faster convergence of the network model. Normalization refers to normalizing values of elements in the array to a value within an interval greater than equal to a and less than equal to b. For example, a = -0.5, and b = 0.5. Or, a = 0, and b = 1. In an example, normalization may be implemented by dividing the elements in the array by the number with the largest absolute value of the elements of this array. In another example, normalization may be implemented by dividing the elements in the array by the variance of the elements of this array. In an example, normalization may be implemented by dividing the elements in the array by a fixed value (for example, a maximum value of all elements in all samples). In yet another example, normalization may be implemented by dividing the elements in the array by a statistical value (for example, a statistical variance of all elements in all samples). For an index value, for example, a beam index, CRI, SSBRI, etc., normalization may be implemented through one-hot encoding (One-Hot Encoding).

In some embodiments, the model means that a data flow between an original input of samples and an output target goes through a plurality of linear components or non-linear components. The above model includes a neural network model, a non-artificial intelligence module for processing information or its corresponding model, and a functional component or function that maps (including linear mapping and nonlinear mapping) input information to output information. In some embodiments, each model corresponds to a model indicator (Model Indicator, Model ID) or a model identifier (model Identity, Model ID). In some embodiments, the model identifier may also have one of the following other equivalent names or concepts: model index, first identifier, function identifier, model indicator, etc.

Exemplarily, the model includes a model structure (Model structure) and model parameters (Model parameters). For example, the model is a neural network model, and the neural network model includes a neural network model structure (Model structure) and neural network model parameters (Model parameters), which are respectively used to describe a structure of the neural network and parameter values of the neural network. A neural network model structure may correspond to a plurality of neural network model parameters, i.e., the neural network model structure may be the same, but the corresponding neural network model parameter values may be different.

In some examples, a communication node may send a function (functionality) or a function index to another communication node to inform the communication node that the information processing mode corresponding to the function index may be used to process information. Herein, the function may also be referred to as a functional module, a functional function, a function mapping, a function description, etc., and is used to describe a feature or a type of the information processing mode. The types of the information processing mode may include a plurality of types, such as information processing modes for positioning, beam management, CSI prediction, beam prediction, channel estimation, etc., and the features of the information processing mode include, but are not limited to, a scenario description adapted by the function, an input parameter description, an output parameter description, and a type of measurement parameters included in an output result. Herein, a function corresponds to one or more information processing modes, each information processing mode may be implemented by one or more models, or a function may be implemented by one or more models, or a function may be implemented by one or more information processing modes other than the models.

In some examples, the model parameters of the neural network are obtained through online training or offline training. For example, the neural network model parameters are trained by inputting at least one sample. Herein, the sample includes a feature and a label. In some examples, the feature is a first beam parameter information array, and the label is a second beam parameter information array. When training the network, there is a correspondence between the first beam parameter information array and the second beam parameter information array, preferably a one-to-one correspondence. In a network model deployment phase or a testing phase, a prediction performance of the network may be known by inputting the first beam parameter information array into the network model, to output a predicted second beam parameter information array, and by comparing the predicted second beam parameter information array with the second beam parameter information array corresponding to the label, and the neural network model parameters may be trained according to a loss function between the two.

In some examples, in order to better transmit data or signals, the base station or terminal needs to acquire a measurement parameter, and the measurement parameter may include channel state information or other parameters used to characterize a channel, where the channel state information may include at least one of: a channel state information-reference signal resource indicator (CSI-RS Resource Indicator, CRI), a synchronization signal block resource indicator (SSBRI), layer 1 reference signal received power (L1 reference signal received power, L1-RSRP or RSRP), differential RSRP, layer 1 signal-to-interference-plus-noise ratio (L1 signal-to-interference noise ratio, L1-SINR or SINR), differential L1-SINR, reference signal received quality (RSRQ), L1-RSRQ, differential RSRQ, a channel quality indicator (CQI), a precoding matrix indicator (PMI), a layer indicator (LI), a rank indicator (RI), or precoding information. The precoding information includes first-type precoding information, such as codebook-based precoding information, and the precoding matrix indicator is one type of the codebook-based precoding information. The precoding information further includes a non-codebook-based implementation. For example, second-type precoding information. In an example, CSI that includes only first-type precoding information is referred to as first-type CSI, and in an example, CSI that includes second-type precoding information is referred to as second-type CSI.

In some examples, channel information is information that is obtained according to a reference signal (e.g., CSI-RS) and used for describing channel environment between communication nodes, such as a time-domain channel matrix, a frequency-domain channel matrix. In some examples, the channel information is a complex matrix, and a size of the channel matrix is related to a number Nt of transmitting antennas, a number Nr of receiving antennas, and a resource element (Resource Element, RE). For example, there is at least one Nr*****Nt channel matrix on a physical resource block (Physical Resource Block).

In the embodiments of the present disclosure, feedback CSI may also be referred to as transmitting CSI or sending CSI, for example, carrying the channel state information on an uplink transmission resource for feedback or transmission. The uplink transmission resource and the corresponding CSI are both indicated by a channel state information report. In an example, transmitting a CSI report refers to transmitting a content that needs to be transmitted as indicated in the CSI report, including but not limited to channel state information, where transmitting here includes sending or receiving, and may also be replaced with feedback or receiving. In an example, transmitting a CSI report refers to transmitting, through the uplink transmission resource, a content that needs to be transmitted as indicated in the CSI report, including but not limited to channel state information, where transmission here includes sending or receiving, and may also be replaced with feedback or receiving.

In some embodiments, the antenna is a physical antenna. In some examples, the antenna is a logical antenna. In some examples, concepts of a port and an antenna are interchangeable. In some examples, the antenna is a sending antenna. In some examples, the antenna is a receiving antenna. In some examples, the antenna includes an antenna pair of a sending antenna and a receiving antenna. In some examples, the antenna may be a uniform linear array. In some examples, the antenna is a uniform planar array, for example, including array elements/antennas with Ng rows and Mg columns, where Ng and Mg are positive integers. In some examples, the antenna is a uniform circular array. In some examples, the antenna may be a non-uniform linear array. In some examples, the antenna is a non-uniform planar array. In some examples, the antenna is a non-uniform circular array. In some examples, the antenna is a directional antenna, and in some examples, the antenna is an omnidirectional antenna. In some examples, the antenna is a dual-polarized antenna. In some examples, the antenna is a single-polarized antenna.

As shown in FIG. 2, the present disclosure provides a reference signal configuration information sending method, and the method includes: S101 to S102.

In S101, reference signal configuration information is generated.

Herein, the reference signal configuration information includes N reference signal patterns, the N reference signal patterns correspond to M resource units, where N and M are integers greater than 1.

In some embodiments, the N reference signal patterns in the embodiments of the present disclosure may be understood as N types of reference signal patterns, N kinds of reference signal patterns, or other similar descriptions. Similarly, the M resource units in the embodiments of the present disclosure may also be understood as M types of resource units, M kinds of resource units, or other similar descriptions.

In some examples or embodiments, the reference signal pattern refers to a resource set of at least one domain of a time-domain resource, a frequency-domain resource, a spatial-domain resource, and a code-domain resource for transmitting a reference signal. For example, a time-frequency resource set, that is, a set of all REs used for transmitting reference signals, may be understood as a time-frequency resource unit set used for transmitting or carrying the reference signals, or a time-domain symbol index set and/or a frequency-domain subcarrier index set of time-frequency REs in a frame structure. A reference signal pattern corresponds to a fixed RE set, and the corresponding time domain location, frequency domain location, and code domain sequence are fixed.

Exemplarily, take an example in which the first communication node is the base station, and the second communication node is the terminal. In addition, the reference signal provided in the present disclosure includes a plurality of types of reference signals, for example, may be a channel state information reference signal (CSI-RS), a demodulation reference signal (DeModulation Reference Signal, DMRS), a sounding reference signal (SRS), a synchronization signal block (SSB), etc. The technical solutions provided in the present disclosure will be explained below by taking an example of DMRS. Typically, the first communication node may pre-configure a reference signal pattern (for example, a DMRS pattern), that is, generate DMRS configuration information and send the DMRS configuration information to the second communication node, and the second communication node may then receive the DMRS based on the DMRS pattern configured by the first communication node.

Exemplarily, two reference signal types are defined in NR, and each reference signal type includes a plurality of reference signal patterns. Typically, the first communication node may configure a reference signal pattern via a higher layer signaling, and then indicate a port set used in the reference signal pattern based on a physical layer signaling.

In addition, in a case where only a front loaded reference signal, for example, a front-loaded demodulation reference signal (front loaded DMRS), is configured, a number of DMRS time-domain symbols may be 1 or 2. To satisfy different moving speeds, the first communication node may also configure an additional-symbol DMRS (Additional DMRS). Herein, a total number of symbols of the front-loaded DMRS and the Additional DMRS does not exceed 4. And since a number of symbols included in a slot may be 1 to 14, a starting symbol of the DMRS may also be configured.

In some embodiments, any one of reference signal patterns among N reference signal patterns is different from other reference signal patterns.

In addition, at least two reference signal patterns among the plurality of reference signal patterns are different in at least one of following aspects: a time-domain density of a CDM group corresponding to the reference signal pattern, a frequency-domain density of the CDM group corresponding to the reference signal pattern, a number of additional reference signal symbols corresponding to the reference signal pattern, a reference signal sequence corresponding to the reference signal pattern, an orthogonal cover code (OCC) of the CDM group corresponding to the reference signal pattern, a starting symbol index corresponding to the reference signal pattern, an index set corresponding to the reference signal pattern, a starting subcarrier index corresponding to the reference signal pattern, or a subcarrier index set corresponding to the reference signal pattern. Herein, the above index may be a combination of an identifier, an indicator, or indices, etc., and may also be referred to as a location, for example, the starting symbol index may be a symbol starting location, the index set may be a symbol location set, the starting subcarrier index may be a subcarrier starting location, and the subcarrier index set may be a subcarrier location set, etc.

Exemplarily, to adapt to channel features of resources of at least one domain of spatial domain, time domain, frequency domain, and code domain, the first communication node may configure N different reference signal patterns (for example, DMRS patterns) for a same second communication node. Correspondingly, the second communication node receives the N pieces of reference signal pattern configuration information, and determines a reference signal pattern on resources of at least one domain of spatial domain, time domain, frequency domain, and code domain according to the N pieces of reference signal pattern configuration information to perform reception of the reference signal, so as to estimate or measure the channel, thereby demodulating received data or signaling.

Herein, the N different reference signal patterns include, but are not limited to at least one of: at least two reference signal patterns among the N different reference signal patterns corresponding to different time-domain densities in the CDM group. For example, CDM groups of two different reference signal patterns include different numbers of time-domain symbols.

At least two reference signal patterns among the N different reference signal patterns correspond to different frequency-domain densities in the CDM group. For example, CDM groups of two different reference signal patterns include different numbers of frequency-domain subcarriers.

At least two reference signal patterns among the N different reference signal patterns correspond to different numbers of additional reference signal symbols (for example, Additional DMRS). For example, one adds one reference signal, for example, the number of DMRS symbols, i.e., Additional DMRS symbols, is 1, and another adds two DMRS symbols, i.e., the number of Additional DMRS symbols is 2.

Among the N different reference signal patterns, at least two reference signal patterns correspond to different reference signal sequences, or the two reference signal patterns correspond to different reference signal sequence initial values. In an example, at least two reference signal patterns among the N different reference signal patterns correspond to different OCC codes of CDM groups.

There are at least two reference signal patterns among the N different reference signal patterns corresponding to different starting symbol locations or located in different symbol locations. For example, at least two DMRS patterns among the N different DMRS patterns correspond to different subcarrier starting locations or different subcarrier locations. Herein, the above location may be a combination of an index or an identifier, an indicator or an index, etc.

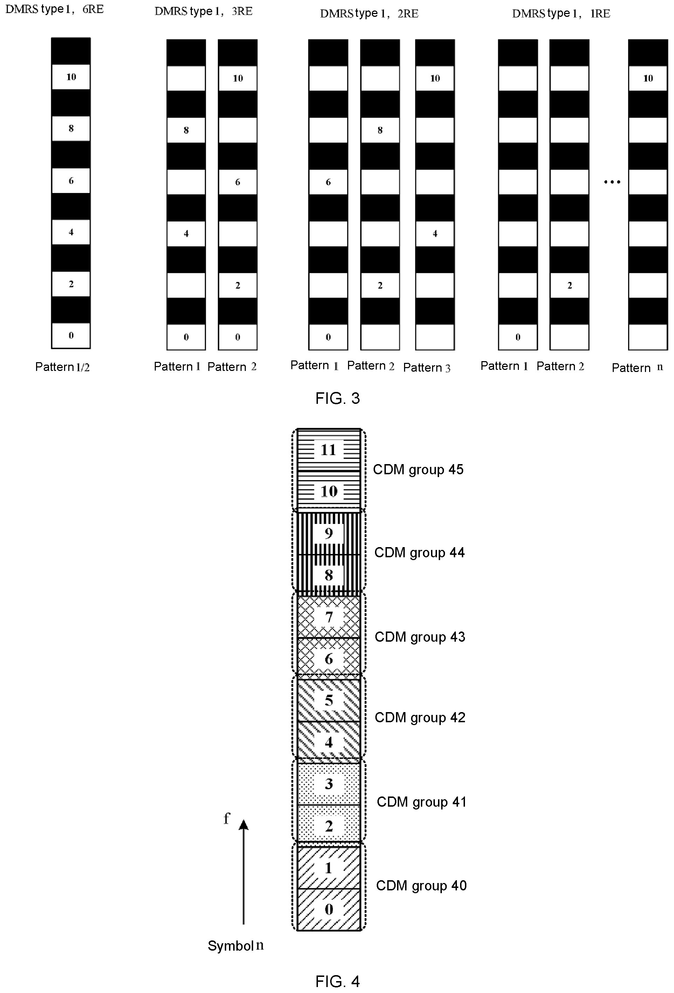

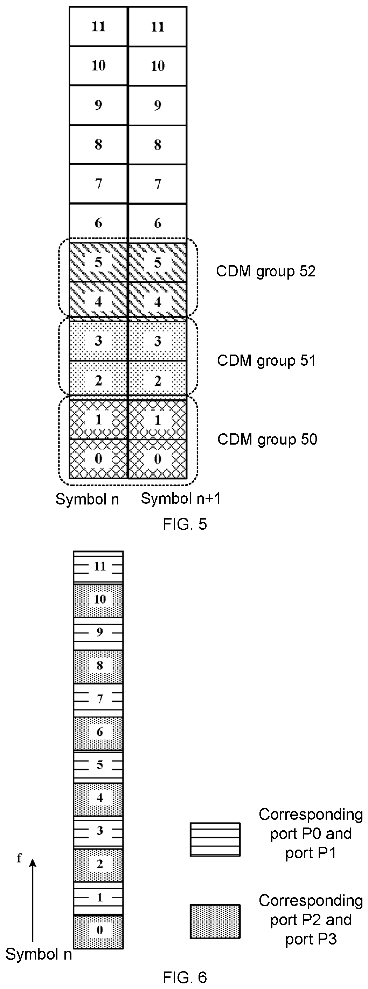

In an example, taking an example in which the reference signal is the DMRS, based on the channel estimation algorithm used by the second communication node, for example, a terminal, the first communication node may, for example, configure a low-density DMRS pattern. Herein, the low-density DMRS pattern may have a plurality of implementations. For example, a subset of a part of REs in a CDM Group may be taken as a CDM group. Exemplarily, as shown in FIG. 3, for a case of a single-symbol DMRS type 1, a CDM group includes 6*****S REs, and in a low-density CDM group, a CDM group may only include 3*****S, 2*****S, or 1*****S REs. For a case of a single-symbol DMRS type 2, a CDM group includes 4*****S REs. In a low-density CDM group, a CDM group may only include 2*****S REs or only 1*****S REs, as shown in FIG. 4, CDM group 40, CDM group 41, CDM group 42, CDM group 43, CDM group 44, and CDM group 45 each include 2*****S REs. As shown in FIG. 5, for a case of a two-symbol DMRS type 2, CDM group 50, CDM group 51, and CDM group 52 each include 4*****S REs. Herein, S is an integer such as 1, 2, 3, 4, etc., representing the number of symbols corresponding to a CDM group. For a case of including Additional DMRS symbols, S may also represent the number of additional DMRS symbols. The terminal receives the DMRS configuration, and receives the DMRS on REs where the DMRS pattern is located, thereby obtaining estimation or measurement of the channel, thereby demodulating received data or signaling.

In some embodiments, the reference signal configuration information further includes a signaling for indicating a correspondence between the N reference signal patterns and the M resource units.

In some embodiments, the correspondence between the reference signal pattern and the resource unit is determined according to a higher layer signaling and/or a physical layer signaling.

In an example, the higher layer signaling and/or physical layer signaling may include M indication values, and each indication value corresponds to a resource unit for indicating a reference signal pattern corresponding to the resource unit. In another example, the higher layer signaling and/or physical layer signaling includes N indication values, and each indication value corresponds to a reference signal pattern for indicating the resource unit corresponding to the reference signal pattern.

In some embodiments, the above higher layer signaling and/or physical layer signaling includes one of: a bitmap, a list, an array or a table. That is, the correspondence between the reference signal pattern and the resource unit is indicated by one of a bitmap, a list, an array, or a table. In some examples, the above higher layer signaling and/or physical layer signaling is referred to as a first higher layer signaling and/or a physical layer signaling.

Exemplarily, taking an example in which the higher layer signaling and/or physical layer signaling is a list, the list includes M indication values, each indication value corresponds to a resource unit (or corresponds to a group of layers, a group of time-domain units, a group of frequency-domain units, etc.) or a channel feature, and is used to indicate the reference signal pattern (or reference signal pattern identifier/index) corresponding to the resource unit. That is, an i-th indication value corresponds to an i-th resource unit, i=1, ..., N. Thus, the length of the list may be determined based on the number of types of channel features in the plurality of resource units. Furthermore, based on the list, the reference signal pattern corresponding to the resource unit may also be determined according to the value of the indication value corresponding to the resource unit.

Alternatively, the list includes N indication values, each indication value corresponds to a reference signal pattern (or a reference signal pattern identifier/index) and is used to indicate a resource unit (or a group of layers, a group of time-domain units, a group of frequency-domain units, etc.) or a channel feature corresponding to the reference signal pattern corresponding to the indication value. That is, the i-th indication value corresponds to the i-th reference signal pattern, where i=1, ..., N. Therefore, the length of the list may be determined based on the number of reference signal patterns. Furthermore, based on the list, a value corresponding to the resource unit may first be determined, and then an indication value corresponding to the resource unit and the reference signal pattern corresponding to the indication value may be determined based on the value.

It should be understood that, the descriptions in this embodiment and subsequent embodiments or examples are merely exemplary. In addition to the list described above, the list may also be replaced by forms such as an array, a table, or a bitmap, etc., which will not be exhaustively listed herein.

In some embodiments, the above N reference signal patterns corresponding to the M resource units includes that: the reference signal configuration information includes a field for indicating a correspondence between the N reference signal patterns and the M resource units.

In some embodiments, the above resource unit includes at least one of: a layer, a codeword, a frequency-domain unit, a time-domain unit, a transmission type, a number of repetition transmissions, a model, a model indicator, a function or a function indicator.

Moreover, the N reference signal patterns corresponding to the M resource units includes one of: the N reference signal patterns corresponding to M layers; the N reference signal patterns corresponding to M codewords; the N reference signal patterns corresponding to M frequency-domain units; the N reference signal patterns corresponding to M time-domain units; the N reference signal patterns corresponding to M transmission types; the N reference signal patterns corresponding to M numbers of repetition transmissions; the N reference signal patterns corresponding to M models or M model indicators; or the N reference signal patterns corresponding to M functions or M function indicators.

Example 1: the N reference signal patterns correspond to the M layers. Herein, the N groups of layers are determined according to the M layers, and a group of layers includes at least one layer, for example, the M layers are divided into N groups of layers.

Exemplarily, a first group of layers consists of odd layers, and a second group of layers consists of even layers. Herein, a first reference signal pattern corresponds to odd layers, and a second reference signal pattern corresponds to even layers.

It should be noted that, the second communication node may receive a plurality of data streams on a same time-frequency resource or at least part of the same time-frequency resources; the plurality of data streams may include data of multiple layers, and a data stream may correspond to a layer. Herein, the plurality of data streams may be from a same first communication node or a plurality of cooperative first communication nodes, for example, a plurality of cooperative base stations. In a case where the plurality of first communication nodes serve a second communication node, and each first communication node may send at least one data stream to the second communication node. Alternatively, a first communication node may send a plurality of data streams to the second communication node. Herein, the plurality of data streams received by the second communication node may correspond to one or more data blocks or correspond to one or more codewords, or a data stream corresponds to a layer. Exemplarily, the first communication node may configure two different DMRS patterns, and in a case where the number of layers to be transmitted simultaneously is greater than or equal to 2, a DMRS pattern corresponds to at least one layer.

In some embodiments, a correspondence or a mapping relationship between a reference signal pattern and a group of layers may be preset, set by default, or set by agreement between the terminal and the base station, or the correspondence may be indicated via the higher layer signaling and/or the physical layer signaling. Exemplarily, in a case of having K different reference signal patterns, K groups of layers may be divided, and each group of layers includes at least one layer for data transmission. Furthermore, the correspondence between K different DMRS patterns and K groups of layers that are preset, set by default, or set by agreement between the terminal and the base station, or may be indicated by the higher layer signaling and/or physical layer signaling. Herein, K is greater than or equal to 2. In an example, the reference signal configuration information further includes a signaling for indicating a correspondence between the N reference signal patterns and the M resource units.

Exemplarily, in a case where the value of K is 2, the correspondence between K=2 different reference signal patterns (e.g., DMRS patterns) and K=2 groups of layers may include at least one of.

A first layer Layer1 included in a first group of layers of the K=2 groups of layers corresponds to a first reference signal pattern DMRS pattern 1, and a second layer Layer2 included in a second group of layers of the K=2 groups of layers corresponds to a second reference signal pattern DMRS pattern 2. That is, the first group of layers of the K=2 groups of layers corresponds to the first reference signal pattern DMRS pattern 1, and the second group of layers of the K=2 groups of layers corresponds to the second reference signal pattern DMRS pattern 2.

A first layer Layer1 and a second layer Layer2 included in the first group of layers of the K=2 groups of layers correspond to the first reference signal pattern DMRS pattern 1, and a third layer Layer3 and a fourth layer Layer4 included in the second group of layers of the K=2 groups of layers correspond to the second reference signal pattern DMRS pattern 2. That is, the first group of layers of the K=2 groups of layers corresponds to the first reference signal pattern DMRS pattern 1, and the second group of layers of the K=2 groups of layers corresponds to the second reference signal pattern DMRS pattern 2.

Odd layers included in the first group of layers of the K=2 groups of layers, i.e., layers with odd layer indices, correspond to the first reference signal pattern DMRS pattern 1, and even layers included in the second group of layers of the K=2 groups of layers, i.e., layers with even layer indices, correspond to the second reference signal pattern DMRS pattern 2. That is, the first group of layers of the K=2 groups of layers corresponds to the first reference signal pattern DMRS pattern 1, and the second group of layers of the K=2 groups of layers corresponds to the second reference signal pattern DMRS pattern 2.

Layers corresponding to a codeword 1 included in the first group of layers of the K=2 groups of layers correspond to the first reference signal pattern DMRS pattern 1, and layers corresponding to a codeword 2 included in the second group of layers of the K=2 groups of layers correspond to the second reference signal pattern DMRS pattern 2. That is, the first group of layers of the K=2 groups of layers corresponds to the first reference signal pattern DMRS pattern 1, and the second group of layers of the K=2 groups of layers corresponds to the second reference signal pattern DMRS pattern 2.

The layer of layer indication (LI) included in the first group of layers of K=2 groups of layers corresponds to the first reference signal pattern DMRS pattern 1, and the other layers, that is, the layers included in the second group of layers correspond to the second reference signal pattern DMRS pattern 2. That is, the first group of layers of the K=2 groups of layers corresponds to the first reference signal pattern DMRS pattern 1, and the second group of layers of the K=2 groups of layers corresponds to the second reference signal pattern DMRS pattern 2.

It should be understood that, it is merely an example, and the correspondence between groups of layers and reference signal patterns may have other similar implementations, which will not be exhaustively listed herein.

It should be noted that, the above correspondence between the groups of layers and reference signal patterns may also be indicated based on the higher layer signaling or the physical layer signaling. For example, a list may be used to indicate the correspondence between reference signal patterns (e.g., DMRS patterns) and layers. The list may include K indication values, each indication value corresponds to a layer, and a value of an i-th indication value corresponds to a DMRS pattern of the i-th layer. Exemplarily, when the value of the i-th indication value is a first value, its corresponding layer may correspond to the first reference signal pattern DMRS pattern 1. When the value of the i-th indication value is a second value, its corresponding layer may correspond to the second reference signal pattern DMRS pattern 2, where i=1, ..., K and the first value and the second value are two different values, which may be integers or Boolean values, for example, the first value is 0, the second value is a non-zero value; the first value is TRUE, and the second value is FALSE. Therefore, the second communication node may, based on a default, agreed, or signaling-indicated correspondence between layers and DMRS patterns, determine a DMRS pattern on each layer, and receive the DMRS on that layer according to the determined DMRS pattern to estimate or measure the channel, thereby demodulating received data or signaling. The list here may be replaced by forms such as an array, a table, or a bitmap. In some examples, the correspondence between groups of layers and reference signal patterns is included in the reference signal configuration information.

Correspondingly, for an uplink data transmission or a channel transmission, the second communication node may send reference signals with different patterns on different layers or groups of layers and transmit the data or signaling on the different layers. The first communication node may receive reference signals with different patterns on different layers or groups of layers.

Example 2: the N reference signal patterns correspond to the M frequency-domain units. Herein, the N groups of frequency-domain units are determined according to the M frequency-domain units, and a group of frequency-domain units includes at least one frequency-domain unit, for example, the M frequency-domain units are divided into N groups of frequency-domain units.

Exemplarily, a first group of frequency-domain units consists of odd-numbered frequency-domain units, and a second group of frequency-domain units consists of even-numbered frequency-domain units. Herein, a third reference signal pattern corresponds to the odd frequency-domain units, and a fourth reference signal pattern corresponds to the even frequency-domain units.

In a case where the second communication node is configured with a plurality of frequency-domain units, for example, the second communication node is configured with a plurality of physical resource blocks (PRB). Further, one or more first communication nodes serve the same second communication node. Exemplarily, the second communication node may be configured with a plurality of different reference signal patterns (e.g., DMRS patterns), and when the number of PRBs to be transmitted simultaneously is greater than or equal to 2, a DMRS pattern corresponds to at least one PRB.

It should be noted that, a number of PRBs corresponding to above each group of PRBs may be different. For example, a group of PRBs includes 2 PRBs, and a group of PRBs includes 4 PRBs. For example, the second communication node may use a compressed sensing technique to perform channel estimation. The first communication node may divide PRBs into a plurality of groups according to a frequency-domain fading degree of a channel. A frequency-domain fading degree of a channel within each group of PRBs satisfies a preset requirement, and then, the first communication node notifies the second communication node of a PRB grouping situation via a signaling. The first communication node configures different reference signal patterns (for example, DMRS patterns) in different groups of PRBs to adapt to channel features within the groups of PRBs. Thus, the second communication node may determine the DMRS pattern on each group of PRBs according to the correspondence between different DMRS patterns and different groups of PRBs configured by a base station, and receive the DMRS on the group of PRBs according to the DMRS pattern.

Herein, the correspondence between the group of PRBs and the reference signal pattern may also be preset, set by default, or set by agreement between the terminal and the base station. Exemplarily, in a case that a value of a number N of groups of PRBs is 2, the correspondence between the group of PRBs and the reference signal pattern (for example, the DMRS pattern) may include: the PRB group 1 corresponding to the DMRS pattern 1, and the PRB group 2 corresponding to the DMRS pattern 2. Herein, the DMRS pattern 1 may also be the third reference signal pattern in the embodiments of the present disclosure, and DMRS pattern 2 may also be the fourth DMRS pattern in the embodiments of the present disclosure. Herein, the third reference signal pattern corresponds to odd frequency-domain units, and the fourth reference signal pattern corresponds to even frequency-domain units. For example, a PRB group with an odd index corresponds to the DMRS pattern 1, and a group of PRBs with an even index corresponds to the DMRS pattern 2.

It should be understood that, it is merely an example, and the correspondence between groups of PRBs and reference signal patterns may have other similar implementations, which will not be exhaustively listed herein.

Alternatively, the list may also be used to indicate the correspondence between the reference signal patterns and the groups of PRBs. The list may include N indication values, each indication value corresponds to a PRB group, and an i-th indication value corresponds to a reference signal pattern of an i-th PRB group. Exemplarily, taking an example in which the reference signal pattern is a DMRS pattern, when an i-th indication value is a first value, a corresponding group of PRBs may correspond to the DMRS pattern 1. When an i-th indication value is a second value, a corresponding group of PRBs may correspond to the DMRS pattern 2, where i=1, ..., K, the first value and the second value are two different values, which may be integers or Boolean values, for example, the first value is 0, the second value is a non-zero value, the first value is TRUE, and the second value is FALSE. Therefore, the second communication node may, based on a default, agreed, or signaling-indicated correspondence between groups of PRBs and DMRS patterns, determine a DMRS pattern on each PRB group, and receive the DMRS on the group of PRBs according to the determined DMRS pattern to estimate or measure the channel, thereby demodulating received data or signaling. The list here may be replaced by forms such as an array, a table, or a bitmap, etc. In some examples, the correspondence between groups of layers and reference signal patterns is included in the reference signal configuration information.

Correspondingly, for an uplink data transmission or a channel transmission, the second communication node may send reference signals with different patterns on different groups of PRBs or groups of layers and transmit the data or signaling on the different groups of PRBs. The first communication node may receive reference signals of different patterns on different groups of PRBs.

Example 3: the N reference signal patterns correspond to the M time-domain units. Herein, the N reference signal patterns correspond to N groups of time-domain units, and the N groups of time-domain units are determined according to the M time-domain units. And, a group of time-domain units includes at least one time-domain unit, for example, the M time-domain units are divided into N groups of time-domain units.

Exemplarily, a first group of time-domain units consists of odd-numbered time-domain units, and a second group of time-domain units consists of even-numbered time-domain units. Herein, a fifth reference signal pattern corresponds to odd-numbered time-domain units, and a sixth reference signal pattern corresponds to even-numbered time-domain units.

Herein, the correspondence between reference signal patterns and time-domain units may also be preset, set by default, or set by agreement between the terminal and the base station, or its correspondence may be indicated by the higher layer signaling and/or the physical layer signaling.

In some embodiments, reference signal patterns corresponding to different slots are different.

Example 4: the N reference signal patterns correspond to the M transmission types. Herein, the N reference signal patterns correspond to N groups of transmission types and the N groups of transmission types are determined according to the M transmission types, for example, the M transmission types are divided into N groups of transmission types, the group of transmission types includes at least one transmission type of an initial transmission and an i-th re-transmission, where i=1, ..., C, C is a maximum number of re-transmissions, and is an i-th re-transmission of a hybrid automatic repeat request (Hybrid Automatic Repeat Request, HARQ).

Exemplarily, a seventh reference signal pattern corresponds to an initial transmission of data, and an eighth reference signal corresponds to a repetition transmission of data.

In some embodiments, the above repetition transmission includes a first repetition transmission, a second repetition transmission, a third repetition transmission, a fourth repetition transmission, etc.

In some embodiments, different numbers of HARQ re-transmissions have different reference signal patterns. Exemplarily, the N reference signal patterns correspond to N groups of re-transmissions, where the group of re-transmissions includes at least one re-transmission. Herein, a ninth reference signal pattern corresponds to an odd-numbered re-transmission of data; a tenth reference signal corresponds to an even-numbered re-transmission of data and for ease of description, the initial transmission is referred to as a 0-th re-transmission.

Herein, the above re-transmission may adopt a hybrid automatic repeat request (Hybrid Automatic Repeat reQuest, HQRQ). It is a technology formed by combining forward error correction (FEC) and automatic repeat request (ARQ). A receiving end, when detecting an error in received data, sends a negative acknowledgement (NACK) to a sending end. Correspondingly, the sending end may receive the NACK, and may determine that the data received by the receiving end has an error based on the NACK, so as to perform re-transmission at an appropriate time.

And, data of initial transmission and different re-transmissions may come from a same transport block (transport block, TB), and redundancy versions (RVs) obtained after channel coding corresponding to the initial transmission and different re-transmissions may be different. In some examples, redundancy versions (RVs) after channel coding for data of initial transmission and different re-transmissions are the same. Generally, RV may take channel versions {0, 1, 2, 3}. Furthermore, the initial transmission and different re-transmissions may also correspond to different reference signal patterns.

In some embodiments, a density of a CDM group corresponding to a reference signal pattern corresponding to the re-transmission (non-initial transmission) is greater than a density of a CDM group corresponding to a reference signal pattern corresponding to the initial transmission, and the density includes a time-domain density and/or a frequency-domain density. In an example, the density of the CDM group corresponding to the reference signal pattern corresponding to the re-transmission is determined according to an accuracy of the initial transmission. For example, if an accuracy of initial transmission satisfies a preset threshold, then the density of the CDM group for re-transmission may select a lower density; otherwise, select a higher density.

In some embodiments, a correspondence or referred to as a mapping relationship between transmission types and reference signal patterns may be preset, set by default, or set by agreement between the terminal and the base station, or the correspondence may be indicated via the higher layer signaling and/or the physical layer signaling. Herein, the transmission type includes at least: an initial transmission, a first repetition transmission, a second repetition transmission, a third repetition transmission, a fourth repetition transmission, etc.

In a specific example, one or more first communication nodes may serve a same second communication node, and the first communication node may configure a plurality of types of different reference signal patterns. Herein, the initial transmission and different re-transmissions correspond to different reference signal patterns. In some examples, there may be K different reference signal patterns (for example, DMRS patterns), and a plurality of transmission types for transmitting data are divided into K groups of transmission types, and each group of transmission types includes at least one transmission (the initial transmission, or an i-th re-transmission, where i=1, ..., C). Then, the correspondence between transmission types and reference signal patterns may be determined according to the above preset, set by default, or set by agreement between the terminal and the base station, or indicated via the higher layer signaling and/or physical layer signaling. Herein, K is greater than or equal to 2.

Exemplarily, taking an example in which the reference signal pattern is the DMRS pattern, in a case where a value of K is 2, the correspondence between transmission types and DMRS patterns may include that: the initial transmission corresponds to DMRS pattern 1, and the i-th re-transmission corresponds to DMRS pattern 2. Herein, a value of i is 1, 2, 3, 4, or other possible number of re-transmissions. The DMRS pattern 1 may also be the seventh DMRS pattern in the embodiments of the present disclosure, and the DMRS pattern 2 may also be the eighth DMRS pattern in the embodiments of the present disclosure. Alternatively, the initial transmission and a first repetition transmission correspond to the DMRS pattern 1, and a second repetition transmission and a third repetition transmission correspond to the DMRS pattern 2. It should be understood that, it is merely an example, and the correspondence between transmission types and DMRS patterns may have other similar implementations, which will not be exhaustively listed herein.

Alternatively, a list may also be used to indicate the correspondence between transmission types and reference signal patterns. The list may include K indication values, each indication value corresponds to a group of transmission types, and an i-th indication value corresponds to a reference signal pattern of an i-th group of transmission types. Exemplarily, taking an example in which the reference signal pattern is a DMRS pattern, when the i-th indication value is a first value, a corresponding group of transmission types may correspond to the DMRS pattern 1. When the i-th indication value is a second value, a corresponding group of transmission types may correspond to the DMRS pattern 2, where i=1, ..., K, the first value and the second value are two different values, which may be integers or Boolean values, for example, the first value is 0, the second value is a non-zero value, the first value is TRUE, and the second value is FALSE. Therefore, the second communication node may, based on a default, agreed, or signaling-indicated correspondence between groups of transmission types and DMRS patterns, determine a DMRS pattern on each group of transmission types, and receive the DMRS on the group of transmission types according to the determined DMRS pattern to estimate or measure the channel, thereby demodulating received data or signaling. The list here may be replaced by forms such as an array, a table, or a bitmap, etc. In some examples, the correspondence between groups of layers and reference signal patterns is included in the reference signal configuration information.

Correspondingly, for an uplink data transmission or a channel transmission, the second communication node may send reference signals with different patterns on different groups of transmission types or groups of layers and transmit the data or signaling on the different groups of transmission types. The first communication node may receive reference signals of different patterns on different groups of transmission types.

Example 5: the N reference signal patterns correspond to M numbers of repetition transmissions. Different numbers of repetition transmissions have different reference signal patterns. Exemplarily, the N reference signal patterns correspond to N groups of repetition transmissions, where a group of repetition transmissions includes at least one repetition transmission, for example, the M numbers of repetition transmissions are divided into the N groups of repetition transmissions.

Herein, a ninth reference signal pattern corresponds to odd numbers of repetition transmission of data. A tenth reference signal corresponds to even numbers of repetition transmission of data.

Herein, the repetition transmission is an important technique for improving accuracy of data or signaling transmission, and the repetition transmission may be performed on the data or signaling without receiving ACK/NACK fed back from a receiving end.

Furthermore, data of K times of repetition transmissions may be from a same transport block, and redundancy versions (RVs) obtained after channel coding corresponding to different repetition transmissions may be different or the same.

The correspondence or referred to as a mapping relationship between the i-th repetition transmission and reference signal patterns may be preset, set by default, or set by agreement between the terminal and the base station, or the correspondence may be indicated via the higher layer signaling and/or the physical layer signaling. In a specific example, the first communication node may configure a plurality of different reference signal patterns. A reference signal pattern corresponds to at least one repetition transmission. Furthermore, in some examples, there may be K different reference signal patterns, and different numbers of repetition transmissions are divided into K groups of repetition transmission indices according to indices of the repetition transmissions, where each group of repetition transmission indices includes at least one index of a repetition transmission. Then, the correspondence between the K groups of repetition transmission indices and the reference signal patterns may be determined according to the above preset, set by default, or set by agreement between the terminal and the base station, or indicated via the higher layer signaling and/or physical layer signaling. Herein, K is greater than or equal to 2.

Exemplarily, taking an example in which the reference signal pattern is the DMRS pattern, in a case where a value of K is 2, the correspondence between the group of repetition transmission indices and DMRS patterns may include any one of: a first repetition transmission and a second repetition transmission corresponding to the DMRS pattern 1, and the third repetition transmission and the fourth repetition transmission corresponding to the DMRS pattern 2. The first repetition transmission corresponds to the DMRS pattern 1, and the second repetition transmission corresponds to the DMRS pattern 2. A repetition transmission with an odd index corresponds to the DMRS pattern 1, and a repetition transmission with an even index corresponds to the DMRS pattern 2. It should be understood that, it is merely an example, and the correspondence between the group of repetition transmission indices and the DMRS patterns may have other similar implementations, which will not be exhaustively listed herein.

Alternatively, a list may also be used to indicate the correspondence between the group of repetition transmission indices and reference signal patterns. The list may include K indication values, each indication value corresponds to a group of repetition transmission indices, and the i-th indication value corresponds to a reference signal pattern of the i-th group of repetition transmission indices. Exemplarily, taking an example in which the reference signal pattern is a DMRS pattern, when the i-th indication value is a first value, a corresponding group of repetition transmission indices may correspond to the DMRS pattern 1. When the i-th indication value is a second value, the corresponding group of repetition transmission indices may correspond to the DMRS pattern 2, where i=1, ..., K, the first value and the second value are two different values, which may be integers or Boolean values, for example, the first value is 0, the second value is a non-zero value, the first value is TRUE, and the second value is FALSE. Therefore, the second communication node may, based on a default, agreed, or signaling-indicated correspondence between the groups of repetition transmission indices and the reference signal patterns, determine a reference signal pattern on each group of repetition transmission indices, and receive the reference signal on the group of repetition transmission indices according to the determined reference signal pattern to estimate or measure the channel, thereby demodulating received data or signaling. The list here may be replaced by forms such as an array, a table, or a bitmap, etc. In some examples, the correspondence between groups of layers and reference signal patterns is included in the reference signal configuration information.

Correspondingly, for an uplink data transmission or a channel transmission, the second communication node may send reference signals of different patterns at repetition transmission time corresponding to different groups of repetition transmission indices, and transmit data or signaling at the repetition transmission time corresponding to the different groups of repetition transmission indices. The first communication node may receive the reference signal of different patterns at the repetition transmission time corresponding to different groups of repetition transmission indices.

Example 6: the N reference signal patterns correspond to the M models or the M model indicators. Herein, N types of reference signal patterns correspond to N groups of models or N groups of model indicators, and the N groups of models are determined according to the M models, that is, the N reference signal patterns correspond to the M models. The group of models includes at least one model, for example, the M models are divided into the N groups of models. Or, the N groups of model indicators are determined according to the M model indicators, the group of model indicators includes at least one model indicator, for example, the M model indicators are divided into the N groups of model indicators.

In an example, an eleventh reference signal pattern corresponds to a first group of models, and a twelfth reference signal pattern corresponds to a second group of models. A group of models includes at least one model.

In some embodiments, the correspondence or referred to as a mapping relationship between models and reference signal patterns may be preset, set by default, or set by agreement between the terminal and the base station, or the correspondence may be indicated via the higher layer signaling and/or the physical layer signaling. The embodiments of the present disclosure are explained below by taking a model as an example, where the model may also be a function, and the model indicator may also be a function indicator. The indication may also be an index, an identifier, etc.

In a specific example, one or more first communication nodes may serve a same second communication node, and the first communication node may configure a plurality of types of different reference signal patterns. Herein, a reference signal pattern corresponds to at least one model. In some examples, there may be K different reference signal patterns, and a plurality of models for information processing are divided into K groups of models, where each group of models includes at least one model. Then, the correspondence between models and reference signal patterns may be determined according to the above preset, set by default, or set by agreement between the terminal and the base station, or indicated via the higher layer signaling and/or physical layer signaling. Herein, K is greater than or equal to 2.

Exemplarily, taking an example in which the reference signal pattern is the DMRS pattern, in a case where a value of K is 2, the correspondence between models and DMRS patterns may include that: group of models 1 corresponds to the DMRS pattern 1, and group of models 2 corresponds to the DMRS pattern 2. For example, a group of models with an odd index corresponds to the DMRS pattern 1, and a group of models with an even index corresponds to the DMRS pattern 2. It should be understood that, it is merely an example, and the correspondence between models and DMRS patterns may have other similar implementations, which will not be exhaustively listed herein.

Alternatively, a list may also be used to indicate the correspondence between models and reference signal patterns. The list may include K indication values, each bit corresponds to a group of models, and the i-th indication value corresponds to a reference signal pattern of an i-th group of models. Exemplarily, taking an example in which the reference signal pattern is a DMRS pattern, when an i-th indication value is a first value, a corresponding group of models may correspond to the DMRS pattern 1. When an i-th indication value is a second value, a corresponding group of models may correspond to the DMRS pattern 2, where i=1, ..., K, the first value and the second value are two different values, which may be integers or Boolean values, for example, the first value is 0, the second value is a non-zero value, the first value is TRUE, and the second value is FALSE. Therefore, the second communication node may, based on a default, agreed, or signaling-indicated correspondence between groups of models and DMRS patterns, determine a DMRS pattern on each group of models, and receive the DMRS on the group of models according to the determined DMRS pattern to estimate or measure the channel, thereby demodulating received data or signaling. The list here may be replaced by forms such as an array, a table, or a bitmap, etc. In some examples, the correspondence between groups of layers and reference signal patterns is included in the reference signal configuration information.

Correspondingly, for an uplink data transmission or a channel transmission, the second communication node may send reference signals with different patterns on different groups of models or groups of layers and transmit the data or signaling on the different groups of models. The first communication node may receive reference signals of different patterns on different groups of models.

Example 7: the N reference signal patterns corresponding to the M functions or the M function indicators, includes that: the N reference signal patterns correspond to the N groups of functions or N groups of function indicators, the N groups of functions are determined according to M functions, for example, the M functions are divided into the N groups of functions, the group of functions includes at least one function, the N groups of function indicators are determined according to the M function indicators, the group of function indicators includes at least one function indicator, for example, the M function indicators are divided into the N groups of function indicators.

In an example, the eleventh reference signal pattern corresponds to a first function, the twelfth reference signal pattern corresponds to a second function, and a group of functions includes at least one function.

In some embodiments, the correspondence or referred to as a mapping relationship between functions and reference signal patterns may be preset, set by default, or set by agreement between the terminal and the base station, or the correspondence may be indicated via the higher layer signaling and/or the physical layer signaling. For detailed examples of the function, reference may be made to the description in Example 6 above, which will not be repeated herein.

In S102, reference signal configuration information is sent.

Exemplarily, the first communication node may send configuration information including N types of reference signal patterns to the second communication node. Herein, the N reference signal patterns correspond to the M resource units, and N and M are integers greater than 1. Correspondingly, the second communication node receives the reference signal configuration information and receives a reference signal on an RE where the pattern of the reference signal is located, thereby obtaining an estimate or measurement of the channel, thereby demodulating received data or signaling.

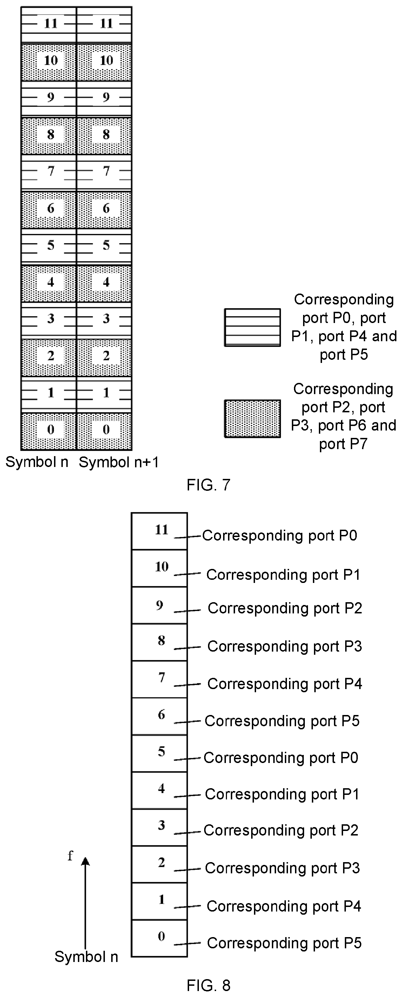

In an example, taking an example in which the reference signal pattern is the DMRS pattern, DMRS configuration information of the N types of DMRS patterns sent from the first communication node includes configuration information of a type-1 pattern. Herein, the type-1 pattern may be a DMRS pattern base on interleaved frequency division multiplexing (IFDM), which may be referred to as DMRS type 1 (DMRS type1). Further, as shown in FIG. 6, the type-1 pattern supports a maximum of 4 ports in a DMRS symbol, including port P0, port P1, port P2, and port P3. As shown in FIG. 7, in two adjacent DMRS symbols, a maximum of 8 ports is supported, including port P0, port P1, port P2, port P3, port P4, port P5, port P6, and port P7. The DMRS type 1 includes at most 2 CDM groups, each CDM group is located on different subcarriers, ports between different CDM groups are distinguished by frequency-domain resources, while ports in a same DMRS group occupy same time-frequency resources. Different codes may be adopted for distinguishing, for example, distinguished by using different CSs (cyclic shifts) or orthogonal cover code sequences.

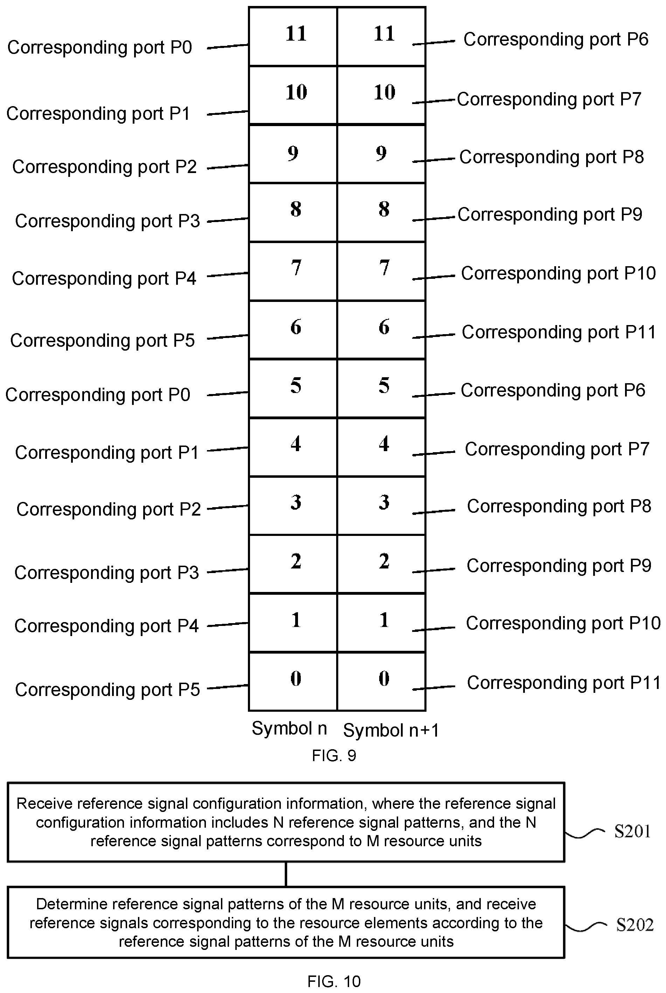

In another example, taking an example in which the reference signal pattern is the DMRS pattern, DMRS configuration information of the N types of DMRS patterns sent from the first communication node includes configuration information of a type-2 pattern. Herein, the type-2 pattern may be a DMRS pattern base on a frequency division orthogonal cover code, which may be referred to as DMRS type 2 (DMRS type2). As shown in FIG. 8, the DMRS type 2 supports a maximum of 6 ports in a DMRS symbol, including port P0, port P1, port P2, port P3, port P4, and port P5. As shown in FIG. 9, the DMRS type 2 supports a maximum of 12 ports in two adjacent DMRS symbols, including port P0, port P1, port P2, port P3, port P4, port P5, port P6, port P7, port P8, port P9, port P10, and port P11. And, the DMRS type 2 includes at most 3 CDM groups, each CDM group is located on different subcarriers, ports between different CDM groups are distinguished by frequency-domain resources, while ports in a same DMRS group occupy same time-frequency resources, distinguished by using different codes, for example, distinguished by using different CSs or OCC sequences.

In some embodiments, the reference signal configuration information is contained in at least one of a RRC signaling, a MAC CE, or DCI.

Base on the technical solutions provided in the present disclosure, an appropriate reference signal pattern may be selected among the plurality of different reference signal patterns base on different channel features or resource units, so that the corresponding reference signal is more appropriate to the current resource unit, thereby the reference signal pattern may be configured more flexibly base on this technical solution.

In some embodiments, the present disclosure further provides a reference signal configuration information receiving method, as shown in FIG. 10, the method includes: S201 to S202.

In S201, reference signal configuration information is received, where the reference signal configuration information includes N reference signal patterns, and the N reference signal patterns correspond to M resource units.

Herein, N and M are integers greater than 1.

In some embodiments, the N reference signal patterns in the embodiments of the present disclosure may be understood as N types of reference signal patterns, N kinds of reference signal patterns, or other similar descriptions. Similarly, the M resource units in the embodiments of the present disclosure may also be understood as M types of resource units, M kinds of resource units, or other similar descriptions.

In some examples or embodiments, the reference signal pattern refers to a resource set of at least one domain of a time-domain resource, a frequency-domain resource, a spatial-domain resource, and a code-domain resource for transmitting a reference signal. For example, a time-frequency resource set, that is, a set of all REs used for transmitting reference signals, may be understood as a time-frequency resource unit set used for transmitting or carrying the reference signals, or a time-domain symbol index set and/or a frequency-domain subcarrier index set of time-frequency REs in a frame structure. A reference signal pattern corresponds to a fixed RE set, and the corresponding time domain location, frequency domain location, and code domain sequence are fixed. Exemplarily, take an example in which the first communication node is the base station, and the second communication node is the terminal. Typically, the first communication node may pre-configure a reference signal pattern, for example, a DMRS pattern, that is, generate DMRS configuration information and send the DMRS configuration information to the second communication node, and the second communication node may then receive the DMRS based on the DMRS pattern configured by the first communication node.

In some embodiments, any one of reference signal patterns among N reference signal patterns is different from other reference signal patterns.

In addition, at least two reference signal patterns among the plurality of reference signal patterns are different in at least one of following aspects: a time-domain density of a CDM group corresponding to the reference signal pattern, a frequency-domain density of the CDM group corresponding to the reference signal pattern, a number of additional reference signal symbols corresponding to the reference signal pattern, a reference signal sequence corresponding to the reference signal pattern, an orthogonal cover code (OCC) of the CDM group corresponding to the reference signal pattern, a starting symbol index corresponding to the reference signal pattern, an index set corresponding to the reference signal pattern, a starting subcarrier index corresponding to the reference signal pattern, or a subcarrier index set corresponding to the reference signal pattern. Herein, the above index may be a combination of an identifier, an indicator, or indices, etc., and may also be referred to as a location, for example, the starting symbol index may be a symbol starting location, the index set may be a symbol location set, the starting subcarrier index may be a subcarrier starting location, and the subcarrier index set may be a subcarrier location set, etc.

In some embodiments, the reference signal configuration information further includes a signaling for indicating a correspondence between the N reference signal patterns and the M resource units.

In some embodiments, the correspondence between the reference signal pattern and the resource unit is determined according to a higher layer signaling and/or a physical layer signaling.

In an example, the higher layer signaling and/or physical layer signaling may include M indication values, and each indication value corresponds to a resource unit for indicating a reference signal pattern corresponding to the resource unit. In another example, the higher layer signaling and/or physical layer signaling includes N indication values, and each indication value corresponds to a reference signal pattern for indicating the resource unit corresponding to the reference signal pattern.

In some embodiments, the above higher layer signaling and/or physical layer signaling includes one of: a bitmap, a list, an array or a table. That is, the correspondence between the reference signal patterns and the resource units is indicated by one of a bitmap, a list, an array, or a table.

Exemplarily, taking an example in which the higher layer signaling and/or physical layer signaling is a list, the list includes M indication values, each indication value corresponds to a resource unit (or corresponds to a group of layers, a group of time-domain units, a group of frequency-domain units, etc.) or a channel feature, and is used to indicate the reference signal pattern (or reference signal pattern identifier/index) corresponding to the resource unit. That is, an i-th indication value corresponds to an i-th resource unit, i=1, ..., N. Thus, the length of the list may be determined based on the number of types of channel features in the plurality of resource units. Furthermore, based on the list, the reference signal pattern corresponding to the resource unit may also be determined according to the value of the indication value corresponding to the resource unit.

Alternatively, the list includes N indication values, each indication value corresponds to a reference signal pattern (or a reference signal pattern identifier/index) and is used to indicate a resource unit (or a group of layers, a group of time-domain units, a group of frequency-domain units, etc.) or a channel feature corresponding to the reference signal pattern corresponding to the indication value. That is, the i-th indication value corresponds to the i-th reference signal pattern, where i=1, ..., N. Therefore, the length of the list may be determined based on the number of reference signal patterns. Furthermore, based on the list, a value corresponding to the resource unit may first be determined, and then an indication value corresponding to the resource unit and the reference signal pattern corresponding to the indication value may be determined based on the value.

It should be understood that, the descriptions in this embodiment are merely exemplary. In addition to the list described above, the list may also be replaced by forms such as an array, a table, or a bitmap, etc., which will not be exhaustively listed herein.

In some embodiments, the above N reference signal patterns corresponding to the M resource units includes that: the reference signal configuration information includes a field for indicating a correspondence between the N reference signal patterns and the M resource units.

In some embodiments, the above resource unit includes at least one of: a layer, a codeword, a frequency-domain unit, a time-domain unit, a transmission type, a number of repetition transmissions, a model, a model indicator, a function or a function indicator.

Moreover, the N reference signal patterns corresponding to the M resource units includes one of: the N reference signal patterns corresponding to M layers; the N reference signal patterns corresponding to M codewords; the N reference signal patterns corresponding to M frequency-domain units; the N reference signal patterns corresponding to M time-domain units; the N reference signal patterns corresponding to M transmission types; the N reference signal patterns corresponding to M numbers of repetition transmissions; the N reference signal patterns corresponding to M models or M model indicators; or the N reference signal patterns corresponding to M functions or M function indicators.

Exemplarily, the N reference signal patterns corresponding to the M layers includes: the N reference signal patterns corresponding to the N groups of layers, where the N groups of layers are determined according to the M layers, a group of layers includes at least one layer, for example, the M layers are divided into the N groups of layers. For example, a first reference signal pattern corresponds to odd layers, and a second reference signal pattern corresponds to even layers.

Alternatively, the N reference signal patterns corresponding to the M frequency-domain units includes: the N reference signal patterns corresponding to the N groups of frequency-domain units, where the N groups of frequency-domain units are determined according to the M frequency-domain units, the group of frequency-domain units includes at least one frequency-domain unit, for example, the M frequency-domain units are divided into the N groups of frequency-domain units. For example, a third reference signal pattern corresponds to the odd frequency-domain units, and a fourth reference signal pattern corresponds to the even frequency-domain units.

Yet alternatively, the N reference signal patterns corresponding to the M time-domain units includes: the N reference signal patterns corresponding to the N groups of time-domain units, where the N groups of time-domain units are determined according to the M time-domain units, the group of time-domain units includes at least one time-domain unit, for example, the M time-domain units are divided into the N groups of time-domain units. For example, a fifth reference signal pattern corresponds to odd-numbered time-domain units, and a sixth reference signal pattern corresponds to even-numbered time-domain units.

Yet alternatively, the N reference signal patterns corresponding to the M transmission types includes: the N reference signal patterns corresponding to N groups of transmission types, where the N groups of transmission types are determined according to the M transmission types, for example, the M transmission types are divided into the N groups of transmission types, and the group of transmission types includes at least one transmission type of an initial transmission and an i-th re-transmission, i=1, ..., C, where C is a maximum number of re-transmissions, for example, a seventh reference signal pattern corresponds to an initial transmission of data, and an eighth reference signal corresponds to a re-transmission of data.

Yet alternatively, the N reference signal patterns corresponding to the M numbers of repetition transmissions includes: the N reference signal patterns corresponding to N groups of repetition transmissions, where the N groups of repetition transmissions are determined according to the M numbers of repetition transmissions, the group of repetition transmissions includes at least one repetition transmission, for example, the M numbers of repetition transmissions are divided into the N groups of repetition transmissions. For example, a ninth reference signal pattern corresponds to odd numbers of repetition transmissions of data, and a tenth reference signal corresponds to even numbers of repetition transmissions of data; and the N reference signal patterns correspond to the N groups of repetition transmissions.

In some embodiments, the transmission type including the initial transmission and the i-th repetition transmission includes one of: a density of a CDM group of a reference signal pattern corresponding to the i-th repetition transmission being greater than a density of a CDM group of a reference signal pattern corresponding to the initial transmission, where the density of the CDM group includes a time-domain density and/or a frequency-domain density. The density of the CDM group of the reference signal pattern corresponding to the i-th re-transmission is determined according to an accuracy of the initial transmission, i=1, ..., C, where C is a maximum number of re-transmissions.

Yet alternatively, the N reference signal patterns corresponding to the M models or M model indicators includes that: the N reference signal patterns correspond to N groups of models or N groups of model indicators, the N groups of models are determined according to the M models, and the group of models includes at least one model, for example, the M models are divided into the N groups of models. Alternatively, the N groups of model indicators are determined according to the M model indicators, the group of model indicators includes at least one model indicator, for example, the M model indicators are divided into the N groups of model indicators.

Yet alternatively, the N reference signal patterns corresponding to the M functions or the M function indicators includes that: the N reference signal patterns correspond to N groups of functions or N groups of function indicators, the N groups of functions are determined according to the M functions, and the group of functions includes at least one function, for example, the M functions are divided into the N groups of functions. The N groups of function indicators are determined according to the M function indicators, the group of function indicators includes at least one function indicator, for example, the M function indicators are divided into the N groups of function indicators.

In some embodiments, the transmission type includes the initial transmission and the repetition transmission. Herein, a density of a CDM group corresponding to the reference signal pattern corresponding to the repetition transmission is greater than a density of a CDM group corresponding to a reference signal pattern corresponding to the initial transmission, and the density includes a time-domain density and/or a frequency-domain density.

In an example, a density of a CDM group corresponding to a reference signal pattern corresponding to the repetition transmission is determined according to an accuracy of the initial transmission.

In some embodiments, the reference signal configuration information is contained in a second higher layer signaling and/or a physical layer signaling, for example, in at least one of a RRC signaling, a MAC CE, or DCI. The reference signal configuration information is acquired by receiving the second higher layer signaling and/or the physical layer signaling.

In some embodiments, the second communication node may receive the reference signal configuration information sent from the first communication node, and receive a reference signal on a RE of a pattern of the reference signal, thereby obtaining an estimate or measurement of the channel, thereby demodulating received data or signaling.

Furthermore, for a detailed description of step S201, reference may be made to the related descriptions in the above steps S101 to S102, which will not be repeated herein.

In S202, reference signal patterns of the M resource units are determined, and reference signals corresponding to resource units are received according to the reference signal patterns of the M resource units.

Herein, the first communication node may pre-configure the reference signal pattern, that is, generate reference signal configuration information and send the reference signal configuration information to the second communication node; correspondingly, the second communication node may receive the reference signal configuration information.

In an example, the second communication node may also determine the reference signal pattern of the M resource units based on the reference signal configuration information that is received. Furthermore, the second communication node may receive a reference signal corresponding to the resource unit according to the reference signal pattern of the M resource units, that is, receive the reference signal based on the reference signal pattern configured by the first communication node.

In another example, the second communication node may also determine the reference signal pattern of the M resource units through the received first higher layer signaling and/or physical layer signaling. Then the reference signal corresponding to the resource unit is received according to the reference signal pattern of the M resource units.

The above introduces the solutions provided by the present disclosure mainly from the perspective of interaction between various communication nodes. It can be understood that, in order to implement the above functions, various communication nodes contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is performed by hardware or by computer software driving hardware, depends on a specific application and a design constraint condition of the technical solution. Professional technicians may use different methods to implement the described functions for each specific application, but these implementations should not be considered beyond the scope of the present disclosure.

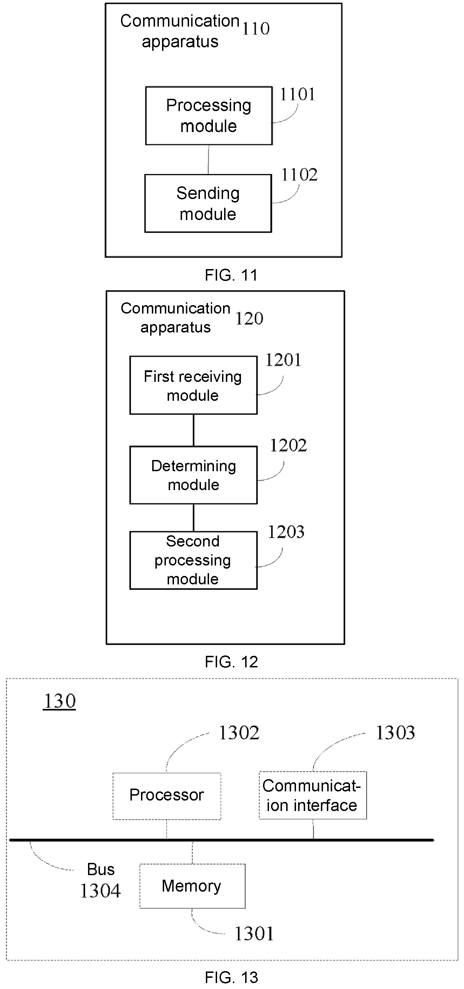

FIG. 11 illustrates a schematic diagram of components of a communication apparatus, provided in the embodiments of the present disclosure. As shown in FIG. 11, the communication apparatus 110 includes a processing module 1101 and a sending module 1102.

In some embodiments, the processing module 1101, is configured to generate reference signal configuration information. The sending module 1102, is configured to send the reference signal configuration information. Herein, the reference signal configuration information includes N reference signal patterns, the N reference signal patterns correspond to M resource units, where N and M are integers greater than 1.

In some embodiments, the N reference signal patterns include at least two different reference signal patterns; where the two reference signal patterns being different means being different in at least one of following aspects: a time-domain density of a CDM group corresponding to a reference signal pattern; a frequency-domain density of a CDM group corresponding to a reference signal pattern; a number of additional reference signal symbols corresponding to a reference signal pattern; a reference signal sequence corresponding to a reference signal pattern; an OCC of a CDM group corresponding to a reference signal pattern; a starting symbol index corresponding to a reference signal pattern; a symbol index set corresponding to a reference signal pattern; a starting subcarrier index corresponding to a reference signal pattern; or a subcarrier index set corresponding to a reference signal pattern.

In some embodiments, the resource unit includes at least one of: a layer, a codeword, a frequency-domain unit, a time-domain unit, a transmission type, a number of repetition transmissions, a model, a model indicator, a function or a function indicator.

In some embodiments, the N reference signal patterns corresponding to the M resource units includes: the N reference signal patterns corresponding to N groups of resource units, where the N groups of resource units are determined according to the M resource units, and the group of the resource units includes at least one resource unit.

In some embodiments, the N reference signal patterns corresponding to the M resource units includes one of: the N reference signal patterns corresponding to M layers; the N reference signal patterns corresponding to M codewords; the N reference signal patterns corresponding to M frequency-domain units; the N reference signal patterns corresponding to M time-domain units; the N reference signal patterns corresponding to M transmission types; the N reference signal patterns corresponding to M numbers of repetition transmissions; the N reference signal patterns corresponding to M models or M model indicators; or the N reference signal patterns corresponding to M functions or M function indicators.

In some embodiments, the N reference signal patterns corresponding to the M layers includes: the N reference signal patterns corresponding to N groups of layers, where the N groups of layers are determined according to the M layers, and the group of layers includes at least one layer.

In some embodiments, the N reference signal patterns corresponding to the M frequency-domain units includes: the N reference signal patterns corresponding to N groups of frequency-domain units, where the N groups of frequency-domain units are determined according to the M frequency-domain units, and the group of frequency-domain units includes at least one frequency-domain unit.

In some embodiments, the N reference signal patterns corresponding to the M time-domain units includes: the N reference signal patterns corresponding to N groups of time-domain units, where the N groups of time-domain units are determined according to the M time-domain units, and the group of time-domain units includes at least one time-domain unit.

In some embodiments, the N reference signal patterns corresponding to the M transmission types includes: the N reference signal patterns corresponding to N groups of transmission types, where the N groups of transmission types are determined according to the M transmission types, and the group of transmission types includes at least one transmission type of an initial transmission or an i-th re-transmission, i=1, ..., C, and C is a maximum number of re-transmissions.

In some embodiments, the transmission type including an initial transmission and an i-th re-transmission, includes one of: a density of a CDM group of a reference signal pattern corresponding to the i-th re-transmission being greater than a density of a CDM group of a reference signal pattern corresponding to the initial transmission; where the density of the CDM group of the reference signal pattern corresponding to the i-th re-transmission is determined according to accuracy of the initial transmission, i=1, ..., C, and C is the maximum number of re-transmissions.

In some embodiments, the N reference signal patterns corresponding to the M numbers of repetition transmissions includes: the N reference signal patterns corresponding to N groups of repetition transmissions, where the N groups of repetition transmissions are determined according to the M numbers of repetition transmissions, and the group of repetition transmissions includes at least one repetition transmission.

In some embodiments, the N reference signal patterns corresponding to the M models, includes: the N reference signal patterns corresponding to N groups of models or N groups of model indicators, where the N groups of models are determined according to the M models, the group of models includes at least one model, or the N groups of model indicators are determined according to M model indicators, and the group of model indicators includes at least one model indicator.

In some embodiments, the N reference signal patterns corresponding to the M functions or the M function indicators, includes: the N reference signal patterns corresponding to N groups of functions or N groups of function indicators, where the N groups of functions are determined according to the M functions, the group of functions includes at least one function, the N groups of function indicators are determined according to the M function indicators, and the group of function indicators includes at least one function indicator.

In some embodiments, the reference signal configuration information further includes a signaling for indicating a correspondence between the N reference signal patterns and the M resource units.

In some embodiments, the N reference signal patterns corresponding to the M resource units, includes: indicating a correspondence between the N reference signal patterns and the M resource units via a first higher layer signaling and/or a physical layer signaling, where the first higher layer signaling and/or physical layer signaling is one of: a bitmap, a list, an array or a table.

In some embodiments, the first higher layer signaling and/or physical layer signaling includes M indication values, each indication value corresponds to a resource unit and is used to indicate a reference signal pattern corresponding to the resource unit.

In some embodiments, the first higher layer signaling and/or physical layer signaling includes N indication values, each indication value corresponds to a reference signal pattern and is used to indicate a resource unit corresponding to the reference signal pattern.

In some embodiments, the reference signal configuration information is sent via at least one of an RRC signaling, a MAC CE, or DCI.

For more detailed descriptions of the above processing module 1101 and the sending module 1102, and more detailed descriptions of various technical features therein, and descriptions of the beneficial effects, etc., references may be made to the above corresponding method embodiment sections, which will not be repeated herein.

FIG. 12 illustrates a schematic diagram of components of a communication apparatus, provided in the embodiments of the present disclosure. As shown in FIG. 12, the communication apparatus 120 includes a first receiving module 1201, a determining module 1202, and a second receiving module 1203.

In some embodiments, the first receiving module 1201, is configured to receive reference signal configuration information, where the reference signal configuration information includes N reference signal patterns, the N reference signal patterns correspond to M resource units, and N and M are integers greater than 1. The determining module 1202, is configured to determine reference signal patterns of the M resource units, and receiving reference signals corresponding to the resource units according to the reference signal patterns of the M resource units.

In some embodiments, the N reference signal patterns include at least two different reference signal patterns; where the two reference signal patterns being different means being different in at least one of following aspects: a time-domain density of a CDM group corresponding to a reference signal pattern; a frequency-domain density of a CDM group corresponding to a reference signal pattern; a number of additional reference signal symbols corresponding to a reference signal pattern; a reference signal sequence corresponding to a reference signal pattern; an OCC of a CDM group corresponding to a reference signal pattern; a starting symbol index corresponding to a reference signal pattern; a symbol index set corresponding to a reference signal pattern; a starting subcarrier index corresponding to a reference signal pattern; or a subcarrier index set corresponding to a reference signal pattern.

In some embodiments, the resource unit includes at least one of: a layer, a codeword, a frequency-domain unit, a time-domain unit, a transmission type, a number of repetition transmissions, a model, a model indicator, a function or a function indicator.

In some embodiments, the N reference signal patterns corresponding to the M resource units, includes: the N reference signal patterns corresponding to N groups of resource units, where the N groups of resource units are determined according to the M resource units, and the group of resource units includes at least one resource unit.

In some embodiments, the N reference signal patterns corresponding to the M resource units includes one of: the N reference signal patterns corresponding to M layers; the N reference signal patterns corresponding to M codewords; the N reference signal patterns corresponding to M frequency-domain units; the N reference signal patterns corresponding to M time-domain units; the N reference signal patterns corresponding to M transmission types; the N reference signal patterns corresponding to M numbers of repetition transmissions; the N reference signal patterns corresponding to M models or M model indicators; or the N reference signal patterns corresponding to M functions or M function indicators.

In some embodiments, the N reference signal patterns corresponding to the M layers includes: the N reference signal patterns corresponding to N groups of layers, where the N groups of layers are determined according to the M layers, and the group of layers includes at least one layer.

In some embodiments, the N reference signal patterns corresponding to the M frequency-domain units includes: the N reference signal patterns corresponding to N groups of frequency-domain units, where the N groups of frequency-domain units are determined according to the M frequency-domain units, and the group of frequency-domain units includes at least one frequency-domain unit.

In some embodiments, the N reference signal patterns corresponding to the M time-domain units includes: the N reference signal patterns corresponding to N groups of time-domain units, where the N groups of time-domain units are determined according to the M time-domain units, and the group of time-domain units includes at least one time-domain unit.

In some embodiments, the N reference signal patterns corresponding to the M transmission types includes: the N reference signal patterns corresponding to N groups of transmission types, where the N groups of transmission types are determined according to the M transmission types, and the group of transmission types includes at least one transmission type of an initial transmission or an i-th re-transmission, i=1, ..., C, and C is a maximum number of re-transmissions.

In some embodiments, the transmission type including an initial transmission and an i-th re-transmission, includes one of: a density of a CDM group of a reference signal pattern corresponding to the i-th re-transmission being greater than a density of a CDM group of a reference signal pattern corresponding to the initial transmission; where the density of the CDM group of the reference signal pattern corresponding to the i-th re-transmission is determined according to accuracy of the initial transmission, i=1, ..., C, and C is the maximum number of re-transmissions.

In some embodiments, the N reference signal patterns corresponding to the M numbers of repetition transmissions includes: the N reference signal patterns corresponding to N groups of repetition transmissions, where the N groups of repetition transmissions are determined according to the M numbers of repetition transmissions, and the group of repetition transmissions includes at least one repetition transmission.

In some embodiments, the N reference signal patterns corresponding to the M models, includes: the N reference signal patterns corresponding to N groups of models or N groups of model indicators, where the N groups of models are determined according to the M models, the group of models includes at least one model, or the N groups of model indicators are determined according to M model indicators, and the group of model indicators includes at least one model indicator.

In some embodiments, the N reference signal patterns corresponding to the M functions or the M function indicators, includes: the N reference signal patterns corresponding to N groups of functions or N groups of function indicators, where the N groups of functions are determined according to the M functions, the group of functions includes at least one function, the N groups of function indicators are determined according to the M function indicators, and the group of function indicators includes at least one function indicator.

In some embodiments, the reference signal configuration information further includes a signaling for indicating a correspondence between the N reference signal patterns and the M resource units.

In some embodiments, the N reference signal patterns corresponding to the M resource units, includes: indicating a correspondence between the N reference signal patterns and the M resource units via a first higher layer signaling and/or a physical layer signaling, where the first higher layer signaling and/or physical layer signaling is one of: a bitmap, a list, an array or a table.

In some embodiments, the first higher layer signaling and/or physical layer signaling includes M indication values, each indication value corresponds to a resource unit and is used to indicate a reference signal pattern corresponding to the resource unit.

In some embodiments, the first higher layer signaling and/or physical layer signaling includes N indication values, each indication value corresponds to a reference signal pattern and is used to indicate a resource unit corresponding to the reference signal pattern.

In some embodiments, the reference signal configuration information is sent via at least one of an RRC signaling, a MAC CE, or DCI.

For more detailed descriptions of the above first reception module 1201, and more detailed descriptions of various technical features therein, and descriptions of the beneficial effects, etc., references may be made to the above corresponding method embodiment sections, which will not be repeated herein.

It should be noted that, the modules in FIG. 11 and FIG. 12 may also be referred to as units, and for example, the sending module may be referred to as a sending unit. In addition, in the embodiments shown in FIG. 10 and FIG. 12, the names of the various units may not be the names shown in the figures, and for example, the sending module may also be referred to as a communication module, and the receiving module may also be referred to as a communication module.

If each unit or module in FIG. 11 or FIG. 12 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the existing technology, or all or a part of the technical solutions, may be embodied in the form of a software product, and the computer software product is stored in a storage medium, and includes a plurality of instructions to cause a computer device (which may be a personal computer, a server, or a network device, etc.) or processor to perform all or a part of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus, the communication apparatus may be the above-mentioned communication apparatus 110 or communication apparatus 120. As shown in FIG. 13, the communication apparatus 130 includes a processor 1302, a communication interface 1303, and a bus 1304. Optionally, the communication apparatus 130 may further include a memory 1301.

The processor 1302 may implement or execute various illustrative logical blocks, modules and circuits described in conjunction with the contents of the present disclosure. The processor 1302 may be a central processing unit, a general-purpose processor, a digital signal processor, an application specific integrated circuit, a field programmable gate array or any other programmable logic device, a transistor logic device, a hardware component, or any combination thereof. It may implement or execute various illustrative logical blocks, modules and circuits described in conjunction with the contents of the present disclosure. The processor 1302 may also be a combination that implements the computing functions, for example, including a combination of one or more microprocessors, a combination of a digital signal processor (DSP) and a microprocessor, or the like.

The communication interface 1303 is configured to connect to other devices via a communication network. The communication network may be an Ethernet, a radio access network, a wireless local area network (WLAN), or the like.

The memory 1301 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 1301 may exist independently of the processor 1302, and the memory 1301 may be connected to the processor 1302 through the bus 1304, for storing instructions or program codes. The processor 1302, when calling and executing the instructions or program codes stored in the memory 1301, is capable of implementing the method provided in the embodiments of the present disclosure.

As another possible implementation, the memory 1301 may also be integrated with the processor 1302.

The bus 1304 may be an extended industry standard architecture (EISA) bus or the like. Buses 1304 may be divided into address buses, data buses, control buses, and the like. For ease of representation, only one bold line is used for the representation in FIG. 13, but it does not mean that there is only one bus or one type of the bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer readable storage medium. All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be or a memory of any one of the foregoing embodiments. The above-mentioned computer readable storage medium may also be an external storage device of the device or apparatus mentioned above, e.g., a plug-in hard disk, a smart memory card (SMC), a secure digital (SD) card, a flash card, etc., equipped on the device or apparatus mentioned above. Furthermore, the computer readable storage medium mentioned above may further include both an internal storage unit and an external storage device of the device or apparatus mentioned above. The computer readable storage medium mentioned above is used to store the computer program mentioned above, and other programs and data required for the device or apparatus mentioned above. The computer readable storage medium mentioned above may further be used to temporarily store data that has been output or is to be output.

The embodiments of the present disclosure further provide a computer program product, the computer product contains a computer program, the computer program product, upon being executed on a computer, enables the computer to perform any one of the methods provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "include/includes/including" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Correspondingly, the specification and drawings herein are merely exemplary illustrations of the present disclosure as defined by the appended claims and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variants of the present disclosure fall within the scope of the claims of the present disclosure and their equivalent technologies, the present disclosure is also intended to contain these modifications and variants.

The above descriptions are only specific implementations of the present disclosure, but the protection scope of the present disclosure is not limited thereto, any variants or replacements within the technical scope disclosed in the present disclosure shall be included in the protection scope of the present disclosure. Therefore, the protection scope of the present disclosure shall be determined based on the protection scope of the claims.

## Claims

1. A reference signal configuration information sending method, **characterized in that** the method comprises:
generating reference signal configuration information; wherein the reference signal configuration information comprises N reference signal patterns, the N reference signal patterns correspond to M resource units, and N and M are integers greater than 1; and
sending the reference signal configuration information.

2. The method according to claim 1, wherein the N reference signal patterns comprise at least two different reference signal patterns; wherein the two reference signal patterns being different means being different in at least one of following aspects:
a time-domain density of a code division multiplexing (CDM) group corresponding to a reference signal pattern;
a frequency-domain density of a CDM group corresponding to a reference signal pattern;
a number of additional reference signal symbols corresponding to a reference signal pattern;
a reference signal sequence corresponding to a reference signal pattern;
an orthogonal cover code (OCC) of a CDM group corresponding to a reference signal pattern;
a starting symbol index corresponding to a reference signal pattern;
a symbol index set corresponding to a reference signal pattern;
a starting subcarrier index corresponding to a reference signal pattern; or
a subcarrier index set corresponding to a reference signal pattern.

3. The method according to claim 1, wherein the resource unit comprises at least one of: a layer, a codeword, a frequency-domain unit, a time-domain unit, a transmission type, a number of repetition transmissions, a model, a model indicator, a function or a function indicator.

4. The method according to claim 1, wherein the N reference signal patterns corresponding to the M resource units comprises:
the N reference signal patterns corresponding to N groups of resource units, wherein the N groups of resource units are determined according to the M resource units, and the group of the resource units comprises at least one resource unit.

5. The method according to claim 1, wherein the N reference signal patterns corresponding to the M resource units comprises one of:
the N reference signal patterns corresponding to M layers;
the N reference signal patterns corresponding to M codewords;
the N reference signal patterns corresponding to M frequency-domain units;
the N reference signal patterns corresponding to M time-domain units;
the N reference signal patterns corresponding to M transmission types;
the N reference signal patterns corresponding to M numbers of repetition transmissions;
the N reference signal patterns corresponding to M models or M model indicators; or
the N reference signal patterns corresponding to M functions or M function indicators.

6. The method according to claim 5, wherein the N reference signal patterns corresponding to the M layers comprises:
the N reference signal patterns corresponding to N groups of layers, wherein the N groups of layers are determined according to the M layers, and the group of layers comprises at least one layer.

7. The method according to claim 5, wherein the N reference signal patterns corresponding to the M frequency-domain units comprises:
the N reference signal patterns corresponding to N groups of frequency-domain units, wherein the N groups of frequency-domain units are determined according to the M frequency-domain units, and the group of frequency-domain units comprises at least one frequency-domain unit.

8. The method according to claim 5, wherein the N reference signal patterns corresponding to the M time-domain units comprises:
the N reference signal patterns corresponding to N groups of time-domain units, wherein the N groups of time-domain units are determined according to the M time-domain units, and the group of time-domain units comprises at least one time-domain unit.

9. The method according to claim 5, wherein the N reference signal patterns corresponding to the M transmission types comprises:
the N reference signal patterns corresponding to N groups of transmission types, wherein the N groups of transmission types are determined according to the M transmission types, and the group of transmission types comprises at least one transmission type of an initial transmission or an i-th re-transmission, i=1, ..., C, and C is a maximum number of re-transmissions.

10. The method according to claim 9, wherein the transmission type comprising an initial transmission and an i-th re-transmission, comprises one of:
a density of a CDM group of a reference signal pattern corresponding to the i-th re-transmission being greater than a density of a CDM group of a reference signal pattern corresponding to the initial transmission; wherein the density of the CDM group of the reference signal pattern corresponding to the i-th re-transmission is determined according to accuracy of the initial transmission, i=1, ..., C, and C is the maximum number of re-transmissions.

11. The method according to claim 5, wherein the N reference signal patterns corresponding to the M numbers of repetition transmissions comprises:
the N reference signal patterns corresponding to N groups of repetition transmissions, wherein the N groups of repetition transmissions are determined according to the M numbers of repetition transmissions, and the group of repetition transmissions comprises at least one repetition transmission.

12. The method according to claim 5, wherein the N reference signal patterns corresponding to the M models, comprises:
the N reference signal patterns corresponding to N groups of models or N groups of model indicators, wherein the N groups of models are determined according to the M models, the group of models comprises at least one model, or the N groups of model indicators are determined according to M model indicators, and the group of model indicators comprises at least one model indicator.

13. The method according to claim 5, wherein the N reference signal patterns corresponding to the M functions or the M function indicators, comprises:
the N reference signal patterns corresponding to N groups of functions or N groups of function indicators, wherein the N groups of functions are determined according to the M functions, the group of functions comprises at least one function, or the N groups of function indicators are determined according to the M function indicators, and the group of function indicators comprises at least one function indicator.

14. The method according to claim 1, wherein the reference signal configuration information further comprises a signaling for indicating a correspondence between the N reference signal patterns and the M resource units.

15. The method according to claim 1, wherein the N reference signal patterns corresponding to the M resource units, comprises:
sending a correspondence between the N reference signal patterns and the M resource units via a first higher layer signaling and/or a physical layer signaling, wherein the first higher layer signaling and/or physical layer signaling is one of: a bitmap, a list, an array or a table.

16. The method according to claim 15, wherein the first higher layer signaling and/or physical layer signaling comprises M indication values, each indication value corresponds to a resource unit and is used to indicate a reference signal pattern corresponding to the resource unit.

17. The method according to claim 15, wherein the first higher layer signaling and/or physical layer signaling comprises N indication values, each indication value corresponds to a reference signal pattern and is used to indicate a resource unit corresponding to the reference signal pattern.

18. The method according to claim 1, wherein the reference signal configuration information is sent via a second higher layer signaling and/or a physical layer signaling.

19. A reference signal configuration information receiving method, **characterized in that** the method comprises:
receiving reference signal configuration information; wherein the reference signal configuration information comprises N reference signal patterns, the N reference signal patterns correspond to M resource units, and N and M are integers greater than 1; and
determining reference signal patterns of the M resource units, and receiving reference signals corresponding to the resource units according to the reference signal patterns of the M resource units.

20. The method according to claim 19, wherein the N reference signal patterns comprise at least two different reference signal patterns; wherein the two reference signal patterns being different means being different in at least one of following aspects:
a time-domain density of a CDM group corresponding to a reference signal pattern;
a frequency-domain density of a CDM group corresponding to a reference signal pattern;
a number of additional reference signal symbols corresponding to a reference signal pattern;
a reference signal sequence corresponding to a reference signal pattern;
an OCC of a CDM group corresponding to a reference signal pattern;
a starting symbol index corresponding to a reference signal pattern;
a symbol index set corresponding to a reference signal pattern;
a starting subcarrier index corresponding to a reference signal pattern; or
a subcarrier index set corresponding to a reference signal pattern.

21. The method according to claim 19, wherein the resource unit comprises at least one of: a layer, a codeword, a frequency-domain unit, a time-domain unit, a transmission type, a number of repetition transmissions, a model, a model indicator, a function or a function indicator.

22. The method according to claim 19, wherein the N reference signal patterns corresponding to the M resource units, comprises:
the N reference signal patterns corresponding to N groups of resource units, wherein the N groups of resource units are determined according to the M resource units, and the group of resource units comprises at least one resource unit.

23. The method according to claim 19, wherein the N reference signal patterns corresponding to the M resource units comprises one of:
the N reference signal patterns corresponding to M layers;
the N reference signal patterns corresponding to M codewords;
the N reference signal patterns corresponding to M frequency-domain units;
the N reference signal patterns corresponding to M time-domain units;
the N reference signal patterns corresponding to M transmission types;
the N reference signal patterns corresponding to M numbers of repetition transmissions;
the N reference signal patterns corresponding to M models or M model indicators; or
the N reference signal patterns corresponding to M functions or M function indicators.

24. The method according to claim 19, wherein the reference signal configuration information further comprises a signaling for indicating a correspondence between the N reference signal patterns and the M resource units.

25. The method according to claim 19, wherein the N reference signal patterns corresponding to the M resource units, comprises:
receiving a correspondence between the N reference signal patterns and the M resource units via a first higher layer signaling and/or a physical layer signaling, wherein the first higher layer signaling and/or physical layer signaling is one of: a bitmap, a list, an array or a table.

26. The method according to claim 25, wherein the first higher layer signaling and/or physical layer signaling comprises M indication values, each indication value corresponds to a resource unit and is used to indicate a reference signal pattern corresponding to the resource unit.

27. The method according to claim 26, wherein the first higher layer signaling and/or physical layer signaling comprises N indication values, each indication value corresponds to a reference signal pattern and is used to indicate a resource unit corresponding to the reference signal pattern.

28. The method according to claim 19, wherein the reference signal configuration information is received via a second higher layer signaling and/or a physical layer signaling.

29. A communication apparatus, **characterized by** comprising: a memory and a processor; wherein the memory is coupled with the processor; the memory is configured to store instructions executable by the processor; and the processor, upon executing the instructions, performs the method according to any one of claims 1 to 28.

30. A computer readable storage medium, **characterized in that** the computer readable storage medium has stored computer instructions thereon, and the computer instructions, upon being executed on a communication apparatus, enable the communication apparatus to perform the method according to any one of claims 1 to 28.
